# EUROPÄISCHE PATENTSCHRIFT

(11) **EP 1 851 066 B1**
(45) Veröffentlichungstag und Bekanntmachung des Hinweises auf die Patenterteilung: **30.07.2014**
(21) Anmeldenummer: 06706767.8
(22) Anmeldetag: 09.02.2006
(51) Int. Cl.: B42D 25/328, B42D 25/373, B42D 25/324, B44C 1/14, G03H 1/02, G03H 1/00, G03H 1/18

(54) **HERSTELLVERFAHREN EINES MEHRSCHICHTKÖRPERS**
PRODUCING A MULTILAYER BODY
FABRICATION D'UN CORPS MULTICOUCHE

(30) Priorität: 10.02.2005 DE 102005006277
(43) Veröffentlichungstag der Anmeldung: 07.11.2007
(60) Teilanmeldung: 13198380.1
(73) Patentinhaber: OVD Kinegram AG, 6301 Zug (CH)
(72) Erfinder: STAUB, René, CH-6332 Hagendorn (CH); TOMPKIN, Wayne, Robert, CH-5400 Baden (CH); SCHILLING, Andreas, CH-6332 Hagendorn (CH)
(74) Vertreter: Zinsinger, Norbert
(86) Internationale Anmeldenummer: PCT/EP2006/001127
(87) Internationale Veröffentlichungsnummer: WO 2006/084686

(56) Entgegenhaltungen:
- EP-A- 0 216 947
- EP-A- 0 537 439
- EP-A- 1 501 045
- WO-A-01/00426
- WO-A-95/22454
- WO-A-99/56964
- DE-A- 4 130 896
- GB-A- 2 136 352
- US-A- 4 882 477

## Beschreibung

Die Erfindung betrifft ein Verfahren zur Herstellung eines Mehrschichtkörpers mit einer Replizierschicht und mindestens einer darauf im Register zu einer ersten Reliefstruktur angeordneten partiell ausgeformten ersten Schicht gemäß Anspruch 1.

Solche Bauelemente eignen sich als optische Bauelemente oder auch als Linsensysteme im Bereich der Telekommunikation.
Die GB 2 136 352 A beschreibt ein Herstellungsverfahren zur Herstellung einer mit einem Hologramm als Sicherheitsmerkmal ausgestatteten Siegelfolie. Hierbei wird eine Kunststoff-Folie nach dem Einprägen einer diffraktiven Reliefstruktur vollflächig metallisiert und sodann passergenau zu der eingeprägten diffraktiven Reliefstruktur bereichsweise demetallisiert.

Das passergenaue Demetallisieren ist kostenaufwendig und die erreichbare Auflösung ist durch die Justiertoleranzen und den verwendeten Prozeß begrenzt.

EP 0 537 439 B2 beschreibt Verfahren zur Herstellung eines Sicherheitselements mit filigranen Mustern. Die Muster sind aus mit einer Metallschicht bedeckten diffraktiven Strukturen gebildet und von transparenten Bereichen, in denen die Metallschicht entfernt ist, umgeben. Es ist vorgesehen, den Umriß des filigranen Musters als Vertiefung in ein metallbeschichtetes Trägermaterial einzubringen, dabei zugleich den Boden der Vertiefungen mit den diffraktiven Strukturen zu versehen und sodann die Vertiefungen mit einem Schutzlack zu verfüllen. Überschüssiger Schutzlack soll mittels eines Abstreichmessers entfernt werden. Nach dem Auftragen des Schutzlacks ist vorgesehen, die Metallschicht in den ungeschützten transparenten Bereichen durch Ätzen zu entfernen. Die Vertiefungen betragen etwa 1 µm bis 5 µm, während die diffraktiven Strukturen Höhenunterschiede von mehr als 1 µm haben können. Bei feineren Strukturen versagt dieses Verfahren, das bei Wiederholungsschritten Justierschritte zur registergenauen Ausrichtung erfordert. Zudem sind flächige zusammenhängende metallische Bereiche schwer zu realisieren, da für das Abstreifen des Schutzlackes die "Abstandshalter" fehlen.

Das Dokument EP 1 501 045 A1 beschreibt unterschiedliche Möglichkeiten, ein holographisches Sicherheitselement zu individualisieren. Hierbei ist auch beschrieben, ein solches holographisches Sicherheitselement mit einer partiellen metallischen Reflexionsschicht zu versehen.

Die WO 01/00426 A1 beschreibt ein Sicherheitselement, welches eine erste Einprägung aufweist, die bei einem bestimmten Betrachtungswinkel nach Art eines Wackelbildes einen Teil einer zweiten Einprägung verdeckt.

Die DE 41 30 896 A1 beschreibt einen Schichtverbund mit Beugungsstrukturen, welche zwischen einer ersten Lackschicht und einer zweiten Lackschicht abgeformt sind. Dieser Schichtverbund weist weiter eine Kleberschicht auf, die bis zum Aufkleben auf einem Dokument durch eine Trägerfolie abgedeckt ist.

Die WO 99/56964 beschreibt ein Verfahren, bei dem eine Druckform einer Druckmaschine eingefärbt wird und damit eine Trägerfolie bedruckt wird, sodass ein Farbauftrag entsteht. Auf der bedruckten Trägerfolie wird eine dünne Abdeckschicht gebildet, welche im Folgenden dann durch ein Waschverfahren bereichsweise in den Bereichen entfernt wird, in denen der Farbauftrag erfolgt ist. Das Substrat kann hierbei eine Beugungsstruktur aufweisen und bei der Abdeckschicht kann es sich um eine Metallschicht handeln.

Die US 4,882,477 beschreibt ein Verfahren zur Herstellung eines elektronischen, kartenförmigen Gegenstands. In eine Deckschicht dieses Gegenstands wird ein Muster von Erhebungen eingeprägt und die diesen Erhebungen gegenüberliegenden Bereichen verfüllt, sodass die den Erhebungen gegenüberliegenden Rückseite der Deckschicht eine ebene Fläche ausbildet. Hierdurch wird eine ebene Fläche zwischen dieser Deckschicht und der anschließenden Schaltungseinrichtung des Gegenstands erreicht.

Aufgabe der vorliegenden Erfindung ist es, ein Verfahren zur Herstellung eines Mehrschichtkörpers anzugeben, bei dem im Register mit hoher Genauigkeit und kostengünstig eine Schicht aufbringbar ist, die Bereiche aufweist, in denen die Schicht nicht vorhanden ist.

Erfindungsgemäß wird diese Aufgabe durch ein Verfahren nach Anspruch 1 gelöst.

Die Verwendung eines Mehrschichtkörpers als Belichtungsmaske zur Herstellung eines weiteren Mehrschichtkörpers mit einer partiell ausgeformten weiteren Schicht ist ideal. Dabei ist vorgesehen, daß die Belichtungsmaske eine Replizierschicht aufweist, daß in einem ersten Bereich der Replizierschicht eine diffraktive erste Reliefstruktur abgeformt ist, daß in einem zweiten Bereich der Replizierschicht die erste Reliefstruktur nicht in der Replizierschicht abgeformt ist, und daß eine erste Schicht auf die Replizierschicht in dem ersten Bereich und in einem zweiten Bereich, in dem die erste Reliefstruktur nicht in der Replizierschicht abgeformt ist, aufgebracht ist, so daß eine durch die erste Schicht hindurch belichtete photoempfindliche Schicht oder photoempfindliche Waschmaske durch die erste Reliefstruktur bedingt im ersten und im zweiten Bereich unterschiedlich belichtet wird.

Der Erfindung liegt die Erkenntnis zugrunde, daß durch die diffraktive Reliefstruktur im ersten Bereich physikalische Eigenschaften der auf die Replizierschicht in diesem Bereich aufgebrachten ersten Schicht, beispielsweise effektive Dicke oder optische Dichte, beeinflußt werden, so daß sich die Transmissions-Eigenschaften der ersten Schicht im ersten und zweiten Bereich unterscheiden. Die erste Schicht wird nun in einem Belichtungsverfahren als "Maskenschicht" für die Teilentfernung der ersten Schicht selbst verwendet, indem eine an die erste Schicht angrenzende photoempfindliche Schicht durch die erste Schicht - also die Funktionsschicht - hindurch belichtet wird. Hierdurch wird gegenüber den mit herkömmlichen Verfahren aufgebrachten Maskenschichten der Vorteil erzielt, daß die Maskenschicht ohne zusätzlichen Justieraufwand registergenau ausgerichtet ist. Die erste Schicht ist integraler Bestandteil der in der Replizierschicht abgeformten Struktur. Deshalb haben nur die Toleranzen dieser Reliefstruktur Einfluß auf die Toleranzen der Lage der ersten Schicht. Eine seitliche Verschiebung zwischen der ersten Reliefstruktur und Bereichen der ersten Schicht mit gleichen physikalischen Eigenschaften tritt nicht auf. Die Anordnung von Bereichen der ersten Schicht mit gleichen physikalischen Eigenschaften ist exakt im Register mit der ersten Reliefstruktur. Zusätzliche Toleranzen entstehen nicht. Bei der ersten Schicht handelt es sich um eine Schicht, die eine Doppel-Funktion erfüllt. Sie erbringt zum einen die Funktion einer hochgenauen Belichtungsmaske für den Herstellungsprozess, andererseits bildet sie am Ende des Herstellungsprozesses eine hochgenau positionierte Funktionsschicht, beispielsweise eine OVD-Schicht oder eine Leiterbahn oder eine Funktionsschicht eines elektrischen Bauelements, etwa eines organischen Halbleiter-Bauelements.

Weiter lassen sich mittels der Erfindung strukturierte Schichten sehr hoher Auflösung erzielen. Die erzielbare Registrierung und Auflösung ist etwa um den Faktor 100 besser als durch bekannte Demetallisierungsverfahren erzielbar. Da die Breite der Strukturelemente der ersten Reliefstruktur im Bereich der Wellenlänge des sichtbaren Lichtes (circa 380 bis 780 nm), aber auch darunter liegen kann, können Musterbereiche mit sehr feinen Konturen ausgebildet werden. Damit werden auch in dieser Hinsicht große Vorteile gegenüber den bisher verwendeten Demetallisierungsverfahren erzielt, und es ist mit der Erfindung möglich, Sicherheitselemente mit höherer Kopier- und Fälschungssicherheit als bisher herzustellen.

Es können Linien und/oder Punkte mit hoher Auflösung erzeugt werden, beispielsweise mit einer Breite bzw. einem Durchmesser von weniger als 5 µm, insbesondere bis etwa 200 nm. Vorzugsweise werden Auflösungen im Bereich von etwa 0,5 µm bis 5 µm, insbesondere im Bereich von etwa 1 µm, erzeugt. Demgegenüber sind mit Verfahren, die eine Justierung im Register vorsehen, Linienbreiten kleiner als 10 µm nur mit sehr hohem Aufwand realisierbar.

Die erste Schicht wird auf die Replizierschicht vorzugsweise mittels Sputtern, Aufdampfen oder Aufsprühen aufgebracht. Beim Sputtern liegt prozessbedingt ein gerichteter Materialauftrag vor, so dass bei einem Aufsputtern von Material der ersten Schicht in konstanter Flächendichte bezogen auf die von der Replizierschicht aufgespannte Ebene auf die mit der Reliefstruktur versehene Replizierschicht das Material lokal unterschiedlich dick abgelagert wird. Beim Aufdampfen und Aufsprühen der ersten Schicht wird verfahrenstechnisch vorzugsweise ebenfalls ein zumindest teilweise gerichteter Materialauftrag erzeugt.

Bei dem Mehrschichtkörper kann es sich um ein Folienelement oder um einen starren Körper handeln. Folienelemente werden beispielsweise verwendet, um Dokumente oder Banknoten mit Sicherheitsmerkmalen zu versehen. Es kann sich dabei auch um Sicherheitsfäden für das Einweben in Papier oder Einbringen in eine Karte handeln, die mit dem erfindungsgemäßen Verfahren mit einer partiellen Demetallisierung in perfektem Register zu einem OVD-Design ausbildbar sind.

Vorteilhafterweise können auch starre Körper, wie eine Ausweiskarte, eine Grundplatte für ein Sensorelement oder eine Gehäuseschale für ein Mobiltelefon, mit den erfindungsgemäßen teildemetallisierten Schichten versehen werden, die im Register zu funktionellen Strukturen oder zu einem diffraktiven Designelement stehen. Es kann vorgesehen sein, die Replizierschicht direkt mit dem Spritzgußwerkzeug oder mittels Abformen eines Stempels in UV-Lack einzubringen und zu strukturieren. Es kann aber auch vorgesehen sein, mit dem weiter oben genannten Verfahren eine Belichtungsmaske zur Ausbildung eines weiteren Mehrschichtkörpers auszubilden. Eine Belichtungsmaske zeichnet sich durch eine besonders hohe Auflösung aus, die mit anderen Massenfertigungs-Verfahren für Sicherheitselemente nicht ausbildbar ist.

Solche Mehrschichtkörper eignen sich beispielsweise als optische Bauelemente, wie Linsensysteme, Belichtungs- und Projektionsmasken oder als Sicherheitselemente zum Sichern von Dokumenten oder ID-Cards, indem sie kritische Bereiche des Dokuments, wie ein Paßbild oder eine Unterschrift des Inhabers oder das gesamte Dokument bedecken. Sie sind auch als Bauelemente oder Dekorationselemente im Bereich der Telekommunikation einsetzbar.

Weiterhin hat es sich bewährt, wenn der Mehrschichtkörper als Sicherheitsmerkmal in einem Fenster eines Wertdokuments angeordnet wird. Mittels des erfindungsgemäßen Verfahrens lassen sich neue Sicherheitsmerkmale mit besonders brilliantem und filigranem Erscheinungsbild generieren. So ist es beispielsweise möglich, durch Bildung einer Rasterung der ersten Schicht im Durchlicht halbtransparente Bilder zu erzeugen. Weiter ist es möglich, in einem solchen Fenster in Reflexion eine erste Information und im Durchlicht eine zweite Information sichtbar werden zu lassen.

Vorteilhafte Ausgestaltungen der Erfindung sind in den Unteransprüchen bezeichnet.

Es kann vorteilhafterweise vorgesehen sein, daß die erste Schicht auf die Replizierschicht vollflächig aufgebracht, vorzugsweise aufgedampft wird. Bei ungleichmäßigem Auftrag der ersten Schicht können in Bereichen, die mit einer konstanten optischen Dichte vorgesehen sind, Unterschiede der optischen Dichte ausgebildet werden und auf diese Weise eine fehlerhafte Struktur ausgebildet werden.

Weiter kann vorgesehen sein, daß die erste Schicht auf die Replizierschicht in einer Dicke aufgebracht wird, bei der die erste Schicht weitgehend opak ist, vorzugsweise eine optische Dichte von größer als 1,5 besitzt.

Überraschender Weise hat sich gezeigt, daß sich durch die Erhöhung der Opazität der ersten Schicht das Verhältnis der Transmissivitäten der Bereiche mit diffraktiver Reliefstruktur vergrößern läßt. Wird so mit entsprechender Beleuchtungsstärke durch eine üblicherweise als opak bezeichnete Schicht (beispielsweise optische Dichte von 5) belichtet, die aufgrund ihrer hohen optischen Dichte normalerweise nicht als Maskenschicht eingesetzt werden würde, lassen sich besonders gute Ergebnisse erzielen.

Von besonderem Vorteil ist, wenn die erste Schicht auf die Replizierschicht vollflächig in einer Dicke aufgebracht wird, bei der die erste Schicht eine optische Dichte zwischen 2 und 7 besitzt.

Vorteilhafterweise ist vorgesehen, daß die erste Schicht von einer Metallschicht oder von einer Schicht aus einer Metallegierung gebildet wird. Solche Schichten können mit bewährten Verfahren, wie Sputtern, aufgebracht werden, und sie weisen bereits bei geringen Schichtdicken eine hinreichende optische Dichte auf. Es kann sich bei der ersten Schicht aber auch um eine nichtmetallische Schicht handeln, die beispielsweise eingefärbt sein kann oder dotiert sein kann, beispielsweise mit Nano-Partikeln oder mit Nano-Sphären, um ihre optische Dichte zu erhöhen.

Es kann weiter vorgesehen sein, daß in dem zweiten Bereich eine zweite Reliefstruktur in der Replizierschicht abgeformt ist und daß als erste Reliefstruktur eine diffraktive Reliefstruktur in die Replizierschicht abgeformt wird, die die Transmission der ersten Schicht im ersten Bereich gegenüber der Transmission der ersten Schicht in dem zweiten Bereich erhöht. Dazu kann die erste Struktur mit einer größeren Relieftiefe als die zweite Struktur ausgebildet werden. Weiter kann vorgesehen sein, daß das Produkt aus Spatialfrequenz und Relieftiefe der ersten Struktur größer als das Produkt aus Spatialfrequenz und Relieftiefe der zweiten Struktur ist. Auch hierdurch ist es möglich, daß durch die Gestaltung der Reliefstruktur der Replizierschicht im ersten Bereich und im zweiten Bereich die Transmission der auf die Replizierschicht im ersten Bereich aufgebrachten Schicht gegenüber der im zweiten Bereich aufgebrachten Schicht erhöht wird. Die zweite Reliefstruktur kann weiter so ausgebildet werden, daß in dem zweiten Bereich die Grenzschicht zwischen Replizierschicht und erster Schicht weitgehend planar ist.

Zur Ausbildung besonders großer Unterschiede der optischen Dichte der ersten und der zweiten Reliefstruktur kann in dem ersten Bereich als erste Reliefstruktur eine diffraktive Reliefstruktur mit einem hohem Tiefen-zu-Breiten-Verhältnis der einzelnen Strukturelemente, insbesondere mit einem Tiefen-zu-Breiten-Verhältnis > 0,3, abgeformt werden und die zweite Reliefstruktur als Reliefstruktur mit niedrigem Tiefen-zu-Breiten-Verhältnis ausgebildet werden.

Durch die Verwendung derartiger spezieller diffraktiver Reliefstrukturen ist es bei geeigneter Wahl der Schichtdicke der ersten Schicht möglich, sehr große, bereits mit dem Auge erkennbare Unterschiede in der optischen Dichte der ersten Schicht im ersten Bereich und im zweiten Bereich zu generieren. Überraschenderweise wurde jedoch festgestellt, daß derart große Unterschiede in der Transmission im ersten und im zweiten Bereich für die Umsetzung des erfindungsgemäßen Verfahrens nicht zwingend sind. Strukturen mit geringen Unterschieden im Tiefen-zu-Breiten-Verhältnis weisen bei dünner Bedampfung auch üblicherweise relativ geringe Unterschiede in der Transmission auf. Selbst geringe relative Unterschiede können jedoch verstärkt werden durch Vergrößerung der Schichtdicke der ersten Schicht und damit der mittleren optischen Dichte. So lassen sich bereits bei recht geringen Unterschieden der Transmission der ersten Schicht im ersten und im zweiten Bereich gute Ergebnisse erzielen. Bei der ersten Schicht kann es sich um eine sehr dünne Schicht in der Größenordnung von einigen nm handeln. Die mit gleichmäßiger Flächendichte bezogen auf die von der Replizierschicht aufgespannte Ebene aufgetragene erste Schicht ist in Bereichen mit einem hohen Tiefen-zu-Breiten-Verhältnis erheblich dünner ausgebildet als in Bereichen mit niedrigem Tiefen-zu-Breiten-Verhältnis.

Das dimensionslose Tiefen-zu-Breiten-Verhältnis ist ein kennzeichnendes Merkmal für die Vergrößerung der Oberfläche vorzugsweise periodischer Strukturen, beispielsweise mit sinusquadratischem Verlauf. Als Tiefe ist hier der Abstand zwischen dem höchsten und dem tiefsten aufeinanderfolgenden Punkt einer solchen Struktur bezeichnet, d.h. es handelt sich um den Abstand zwischen "Berg" und "Tal". Als Breite ist der Abstand zwischen zwei benachbarten höchsten Punkten, d.h. zwischen zwei "Bergen", bezeichnet. Je höher nun das Tiefen-zu-Breiten-Verhältnis ist, desto steiler sind die "Bergflanken" ausgebildet und desto dünner ist die auf den "Bergflanken" abgeschiedene erste Schicht ausgebildet. Der Effekt der Ausbildung höherer Transmission, insbesondere Transparenz bei Zunahme des Tiefen-zu-Breiten-Verhältnisses wird auch bei Strukturen mit vertikalen Flanken beobachtet, beispielsweise bei Rechteckgittern. Es kann sich aber auch um Strukturen handeln, auf die dieses Modell nicht anwendbar ist. Beispielsweise kann es sich um diskret verteilte linienförmige Bereiche handeln, die nur als ein "Tal" ausgebildet sind, wobei der Abstand zwischen zwei "Tälern" um ein Vielfaches höher ist als die Tiefe der "Täler". Bei formaler Anwendung der vorstehend genannten Definition würde das so berechnete Tiefen-zu-Breiten-Verhältnis annähernd Null sein und nicht das charakteristische physikalische Verhalten widerspiegeln. Deshalb ist bei diskret angeordneten Strukturen, die im wesentlichen nur aus einem "Tal" gebildet sind, die Tiefe des "Tales" zur Breite des "Tales" ins Verhältnis zu setzen.

Wie sich überraschenderweise zeigte, kommt es dabei nicht darauf an, daß die Bereiche mit hohem Tiefen-zu-Breiten-Verhältnis transparent ausgebildet sind. Es kann sich dabei um Strukturen handeln, die beispielsweise optisch aktive Bereiche eines Hologramms oder Kinegram^{®}-Sicherheitsmerkmals bilden. Es kommt nur darauf an, daß sich diese Bereiche zu anderen Bereichen durch ihre Transmissionseigenschaften beziehungsweise eine geringere oder eine größere optische Dichte abgrenzen.

Vorzugsweise kann vorgesehen sein, daß die zweite Reliefstrukur als optisch aktive, vorzugsweise diffraktive Struktur ausgebildet ist. Unter den Strukturen, die dies bewirken, sind sowohl reflektierende als auch transmittierende lichtbeugende, lichtbrechende oder lichtstreuende Mikro- oder Nanostrukturen zu verstehen. Es kann sich dabei beispielsweise um Gitterstrukturen, wie Lineargitter oder Kreuzgitter, um bilderzeugende Strukturen wie Hologramm oder Kinegram^{®}, isotrope oder anisotrope Mattstrukturen, binäre oder kontinuierliche Fresnellinsen, Mikroprismen, Mikrolinsen, Blazegitter, Kombinationsstrukturen und Makrostrukturen handeln. Nach Entfernung der ersten Schicht im ersten Bereich ist diese optisch aktive Struktur passergenau mit der ersten Schicht hinterlegt, so daß sich hierdurch Sicherheitsmerkmale mit hoher Fälschungssicherheit generieren lassen.

Bei der ersten und der zweiten Reliefstruktur kann es sich hierbei um Reliefstrukturen handeln, beispielsweise um ein Kinegram^{®}, bei dem eine oder mehrere Reliefparameter, beispielsweise Orientierung, Feinheit oder Profilform variieren, um die gewünschten diffraktiven Eigenschaften zu erzeugen. Derartige Strukturen haben so nicht nur die Aufgabe, eine Veränderung der Transmissionseigenschaften der ersten Schicht in dem Bereich zu erzielen, in dem die Reliefstruktur in die Replizierschicht abgeformt ist, sondern zusätzlich noch die Funktion, bei Hinterlegung mit einer Reflektionsschicht oder einer optischen Trennschicht als optisch variables Designelement zu wirken. Wird neben einer derartigen ersten Reliefstruktur noch eine derartige zweite Reliefstruktur in die Replizierlackschicht abgeformt, so unterscheiden sich die erste und die zweite Reliefstruktur vorzugsweise in einem oder mehreren für die Transmissionseigenschaften der ersten Schicht relevanten Parametern, unterscheiden sich so beispielsweise in der Relieftiefe oder in dem Tiefen-zu-Breiten-Verhältnis. So ist es beispielsweise möglich, zwei Kinegram^{®} Sicherheitsmerkmale mit filigranem Linienmuster teilweise überlappend in die Replizierschicht abzuformen. Das erste Kinegram^{®} bildet die erste Reliefstruktur und das zweite Kinegram^{®} bildet die zweite Reliefstruktur. Die Reliefstrukturen der beiden Designs unterscheiden sich im typischen Tiefen-zu-Breiten-Verhältnis, während die übrigen Strukturparameter ähnlich sind. Wir haben somit drei "Gruppen" von Strukturen, nämlich Strukturen der Gruppe I im ersten Kinegram^{®}, Strukturen der Gruppe II im zweiten Kinegram^{®} und Strukturen der Gruppe III im Hintergrund. In einem ersten Schritt verbleibt die erste Schicht, beispielsweise eine aufgedampfte Metallschicht, wie eine Kupferschicht, im Kinegram^{®}-Bereich des ersten Designs, der Rest wird entfernt. Anschließend wird ein anderes Material, beispielsweise Aluminium, ganzflächig aufgedampft und durch geeignete Prozeßführung in den Hintergrundbereichen entfernt. Auf diese Weise erhält man zwei registerhaltig teilmetallisierte Designs, die sich jedoch in der dem Betrachter zugewandten Metallschicht (Kupfer, Aluminium) unterscheiden.

Das Verfahren kann im weiteren so ausgebildet sein, daß als photoempfindliche Schicht oder als photoempfindliche Waschmaske ein photoempfindliches Material mit einer binären Charakteristik aufgebracht wird und daß die photoempfindliche Schicht bzw. die photoempfindliche Waschmaske durch die erste Schicht hindurch in einer Belichtungsstärke und Belichtungsdauer belichtet werden, daß die photoempfindliche Schicht bzw. die photoempfindliche Waschmaske im ersten Bereich, in dem die Transmission der ersten Schicht durch die erste Reliefstruktur erhöht ist, aktiviert wird und im zweiten Bereich nicht aktiviert wird. Das erfindungsgemäße Verfahren ist auch anwendbar, wenn sich die optischen Dichten des ersten Bereiches und des zweiten Bereiches nur wenig voneinander unterscheiden, wobei wie weiter oben bereits erläutert, überraschenderweise von einer hohen mittleren optischen Dichte ausgegangen werden kann.

In einer vorteilhaften Ausgestaltung ist vorgesehen, daß die photoempfindliche Schicht bzw. Waschmaske durch die erste Schicht mittels UV-Strahlung belichtet wird.

Experimente haben gezeigt, daß die durch die unterschiedliche Gestaltung der Reliefstruktur im ersten und zweiten Bereich erzielbaren Unterschiede in den Transmissionseigenschaften der ersten Schicht im Bereich der UV-Strahlung besonders ausgeprägt sind. Bei der Verwendung von UV-Strahlung für die Belichtung lassen sich so besonders gute Ergebnisse erzielen.

Als photoempfindliche Schicht kann eine photoempfindliche Waschmaske vorgesehen sein, wobei die durch die Belichtung aktivierten Bereiche der photoempfindlichen Waschmaske und die dort angeordneten Bereiche der ersten Schicht in einem Waschprozeß entfernt werden.

Es kann sich bei der photoempfindlichen Schicht aber auch um eine Schicht handeln, die nach der Belichtung entwickelt wird und sodann eine Ätzmaske für die erste Schicht bildet.

Weiter kann eine photoempfindliche Schicht vorgesehen sein, die durch Belichtung im ersten Bereich, in dem die Transmission der ersten Schicht durch die erste Reliefstruktur erhöht ist, aktiviert wird und sodann ein Ätzmittel für die erste Schicht bildet.

Bei der photoempfindlichen Schicht kann es sich um einen Photoresist handeln, der als positiver oder als negativer Photoresist ausgebildet sein kann. Auf diese Weise können bei sonst gleicher Ausbildung der Replizierschicht unterschiedliche Bereiche der ersten Schicht entfernt werden.

Es kann weiter vorgesehen sein, daß die photoempfindliche Schicht als ein Photopolymer ausgebildet wird.

Als Ätzmittel für die erste Schicht können beispielsweise Laugen oder Säuren vorgesehen sein. Es kann weiterhin vorgesehen sein, daß die erste Schicht nur teilweise abgetragen wird und die Ätzung abgebrochen wird, sobald eine vorbestimmte Transparenz erreicht ist. Dadurch können beispielsweise Sicherheitsmerkmale erzeugt werden, die auf lokal unterschiedlicher Transparenz beruhen.
Wird beispielsweise Aluminium als erste Schicht verwendet, so können Laugen wie NaOH oder KOH als isotrop wirkende Ätzmittel eingesetzt werden. Auch der Einsatz saurer Medien, wie PAN (eine Mischung aus Phosphorsäure, Salpetersäure und Wasser) ist möglich.

Die Reaktionssgeschwindigkeit nimmt typischerweise mit der Konzentration der Lauge und der Temperatur zu. Die Wahl der Prozessparameter richtet sich nach der Reproduzierbarkeit des Prozesses und der Beständigkeit des Mehrschichtkörpers.
Einflussfaktoren beim Ätzen mit Lauge sind typischerweise die Zusammensetzung des Ätzbades, insbesondere die Konzentration an Ätzmittel, die Temperatur des Ätzbades und die Anströmbedingungen der zu ätzenden Schicht im Ätzbad. Typische Parameterbereiche der Konzentration des Ätzmittels im Ätzbad liegen im Bereich von 0,1 % bis 10 % und der Temperatur liegen im Bereich von 20°C bis 80°C.

Der Ätzvorgang der ersten Schicht kann elektrochemisch unterstützt werden. Durch Anlegen einer elektrischen Spannung wird der Ätzvorgang verstärkt. Die Wirkung ist typischerweise isotrop, sodass die strukturabhängige Oberflächenvergrösserung den Ätzeffekt zusätzlich verstärkt. Typische elektrochemische Additive wie Netzmittel, Puffersubstanzen, Inhibitoren, Aktivatoren und Katalysatoren, um beispielsweise Oxidschichten zu entfernen, können den Ätzprozess unterstützen.

Während des Ätzprozesses kann es zu einer Verarmung an Ätzmedium, respektive Anreicherung der Ätzprodukte, in der Grenzschicht zur ersten Schicht kommen, wodurch die Geschwindigkeit des Ätzens verlangsamt wird. Eine forcierte Durchmischung des Ätzmediums, gegebenenfalls durch eine Ausbildung einer geeigneten Strömung oder eine Ultraschallanregung, verbessert das Ätzverhalten.

Der Ätzprozess kann weiterhin ein zeitliches Temperaturprofil aufweisen, um das Ätzergebnis zu optimieren. So kann zu Beginn kalt und mit zunehmender Einwirkdauer wärmer geätzt werden. Im Ätzbad wird dies vorzugsweise durch einen räumlichen Temperaturgradienten realisiert, wobei der Mehrschichtkörper durch ein langgestrecktes Ätzbad mit unterschiedlichen Temperaturzonen gezogen wird.

Die letzten Nanometer der ersten Schicht können sich im Ätzprozess als relativ hartnäckig und beständig gegen das Ätzen erweisen. Zur Entfernung von Resten der ersten Schicht ist daher eine geringfügige mechanische Unterstützung des Ätzprozesses vorteilhaft. Die Hartnäckigkeit basiert auf einer gegebenenfalls geringfügig anderen Zusammensetzung der ersten Schicht, vermutlich aufgrund von Grenzschichtphänomenen beim Bilden der ersten Schicht auf der Replizierschicht. Die letzen Nanometer der ersten Schicht werden in diesem Fall vorzugsweise mittels eines Wischprozesses entfernt, indem der Mehrschichtkörper über ein mit einem feinen Tuch bespannte Walze geführt wird. Das Tuch wischt die Reste der ersten Schicht ab, ohne den Mehrschichtkörper zu beschädigen.

Beim Ätzen muß es sich nicht um einen Fertigungsschritt handeln, der mit Flüssigkeiten durchgeführt wird. Es kann sich auch um einen "Trockenprozeß" handeln, wie beispielsweise Plasma-Ätzen.

Weiterhin hat sich zum Abtrag der ersten Schicht die Laserablation bewährt. Bei Strukturen mit einem hohem Tiefen-zu-Breiten-Verhältnis und insbesondere Reliefstrukturen, bei denen der typische Abstand zwischen zwei benachbarten Erhebungen kleiner als die Wellenlänge des einfallenden Lichts ist, sogenannten Zero-Order-Strukturen, kann ein Grossteil des einfallenden Lichts absorbiert werden, auch wenn der Reflexionsgrad der Reflexionsschicht in einem spiegelnd reflektierenden Bereich hoch ist. Mittels eines fokussierten Laserstrahls wird die als Reflexionsschicht ausgebildete erste Schicht bestrahlt, wobei in den stark absorbierenden Bereichen, welche die erwähnten Strukturen mit hohem Tiefen-zu-Breiten-Verhältnis aufweisen, die Laserstrahlung vermehrt absorbiert und die Reflexionsschicht entsprechend erwärmt wird. Bei hohen Energieeinträgen kann die Reflexionsschicht lokal abplatzen, wobei ein Abtrag beziehungsweise eine Ablation der Reflexionsschicht oder eine Koagulation des Materials der Reflexionsschicht auftritt. Erfolgt der Energieeintrag durch den Laser lediglich kurzzeitig und ist der Effekt der Wärmeleitung somit nur gering, so erfolgt die Ablation oder Koagulation nur in den durch die Reliefstruktur vordefinierten Bereichen.

Einflussfaktoren bei der Laserablation sind die Gestaltung der Reliefstruktur (Periode, Tiefe, Orientierung, Profil), die Wellenlänge, die Polarisation und der Einfallswinkel der einfallenden Laserstrahlung, die Dauer der Einwirkung (zeitabhängige Leistung) und die lokale Dosis der Laserstrahlung, die Eigenschaften und das Absorptionsverhalten der ersten Schicht, sowie eine eventuelle Über- und Unterdeckung der ersten Schicht mit weiteren Schichten, wie der strukturierten photosensitiven oder Waschlackschicht.

Für die Laserbehandlung haben sich unter anderem Nd:YAG-Laser als geeignet erwiesen. Diese strahlen bei etwa 1064 nm und werden vorzugsweise auch gepulst betrieben. Weiterhin können Diodenlaser verwendet werden. Mittels einer Frequenzveränderung, z.B. einer Frequenzverdoppelung, kann die Wellenlänge der Laserstrahlung geändert werden.

Der Laserstrahl wird Mittels einer sogenannten Scanvorrichtung, z.B. mittels galvanometrischer Spiegel und Fokussierlinse, über den Mehrschichtkörper geführt. Pulse mit einer Dauer im Bereich von Nano- bis Mikrosekunden werden während des Scanvorgangs ausgesendet und führen zu der oben beschriebenen, durch die Struktur vorbestimmte Ablation oder Koagulation der ersten Schicht. Die Pulsdauern liegen typischerweise unterhalb von Millisekunden, vorteilhafterweise im Bereich weniger Mikrosekunden oder darunter. So können durchaus auch Pulsdauern von Nanosekunden bis Femtosekunden eingesetzt werden. Eine genaue Positionierung des Laserstrahls ist nicht notwendig, da der Prozess selbstreferenzierend ist, sofern die strukturiert vorliegende photoempfindliche Schicht oder Waschmaske einen Zugang der Laserstrahlung zur ersten Schicht partiell verhindert. Der Prozess wird vorzugsweise durch eine geeignete Wahl des Laserstrahlprofils und der Überlappung angrenzender Pulse weiter optimiert.

Es ist aber ebenso möglich, den Weg des Lasers über den Mehrschichtkörper im Register zu in der Replizierschicht angeordneten Reliefstrukturen oder Öffnungen in der photoempfindlichen Schicht oder Waschmaske zu steuern, so dass lediglich Bereiche mit gleicher Reliefstruktur oder mit/ohne Öffnungen in der photoempfindlichen Schicht oder Waschmaske bestrahlt werden. Für eine solche Steuerung können beispielsweise Kamerasysteme eingesetzt werden.

Anstelle eines auf einen Punkt oder eine Linie fokussierten Lasers können auch flächige Strahler eingesetzt werden, welche einen kurzzeitigen, kontrollierten Puls aussenden, wie beispielsweise Blitzlampen.

Zu den Vorteilen des Laserablations-Verfahrens gehört unter anderem, dass die partielle und zu einer Reliefstruktur registrierte Entfernung der ersten Schicht auch erfolgen kann, wenn diese auf beiden Seiten mit einer oder mehreren weiteren, für die Laserstrahlung durchlässigen Schichten bedeckt und somit für Ätzmedien nicht direkt zugänglich ist. Die erste Schicht wird durch den Laser lediglich aufgebrochen. Das Material der ersten Schicht setzt sich in der Form von kleinen Konglomeraten oder kleinen Kügelchen wieder ab, welche für den Betrachter optisch nicht in Erscheinung treten und die Transparenz im bestrahlten Bereich nur unwesentlich beeinflussen.

Nach der Laserbehandlung noch auf der Replizierschicht verbliebene Rückstände der ersten Schicht können gegebenenfalls mittels eines anschliessenden Waschprozesses entfernt werden, sofern die erste Schicht direkt zugänglich ist.

Nach der Ätzung der ersten Schicht kann vorgesehen sein, daß die Überreste der Ätzmasken entfernt werden.

In einer weiteren vorteilhaften Ausgestaltung kann in die Bereiche, in denen die erste Schicht entfernt worden ist, eine zweite Schicht eingebracht werden. Es kann weiter vorgesehen sein, daß die erste Schicht entfernt wird und durch eine dritte Schicht ersetzt wird. Das erfindungsgemäße Verfahren beschränkt sich also nicht auf die teilweise Entfernung einer Schicht, sondern es kann weitere Verfahrensschritte aufweisen, die den Austausch von Schichten vorsehen oder die Wiederholung von Verfahrensschritten bei Ausnutzung von Unterschieden der optischen Dichte zur Bildung bzw. Differenzierung von Bereichen.

Es kann weiter vorgesehen sein, daß die erste Schicht und/oder die zweite Schicht und/oder die dritte Schicht galvanisch verstärkt werden, wenn es sich dabei um elektrisch leitfähige Schichten handelt oder um Schichten, die für stromloses Galvanisieren geeignet sind.

Für ein nach dem beschriebenen Verfahren hergestellten Mehrschichtkörper kann vorgesehen sein, daß der zweite Bereich aus zwei oder mehr vom ersten Bereich umschlossenen Teilbereichen besteht, daß in dem zweiten Bereich eine optisch aktive zweite Reliefstruktur in der Replizierschicht abgeformt ist, und daß die erste Schicht eine Reflexionsschicht ist, die in dem ersten Bereich entfernt ist und so passergenau zur zweiten Reliefstruktur angeordnet ist. Solche Mehrschichtkörper können vorteilhafterweise als fälschungssichere Sicherheitselemente vorgesehen sein. Sie sind bereits deshalb besonders fälschungssicher, weil mit dem erfindungsgemäßen Verfahren besonders kleine Linienbreiten ausbildbar sind. Außerdem können diese feinen Linien wegen ihrer diffraktiven Struktur und ihrer passergenauen Ausrichtung zur Reflexionsschicht optische Effekte ausbilden, die nur extrem schwierig nachahmbar sind. Bei dem Mehrschichtkörper kann es sich beispielsweise um eine Transferfolie, insbesondere um eine Heißprägefolie oder Laminierfolie handeln.

Es kann weiter vorgesehen sein, daß der erste Bereich aus zwei oder mehr vom zweiten Bereich umschlossenen Teilbereichen besteht oder umgekehrt, und daß die erste Schicht eine Reflexionsschicht ist, die in dem zweiten Bereich entfernt ist und so passergenau zur ersten Reliefstruktur angeordnet ist.

Vorteilhafte Ausgestaltungen sehen vor, daß die Teilbereiche des zweiten Bereichs bzw. die Teilbereiche des ersten Bereichs eine Breite von weniger als 2 mm, vorzugsweise von weniger als 1 mm aufweisen.

Weitere Ausgestaltungen sehen vor, daß bei dem Mehrschichtkörper eine zweite Schicht in den Bereichen der Replizierschicht angeordnet ist, in denen die erste Schicht entfernt worden ist.

Es kann vorgesehen sein, daß die erste Schicht und/oder die zweite Schicht aus einem Dielektrikum, beispielsweise aus TiO₂ oder ZnS, oder aus einem Halbleiter ausgebildet sind bzw. ist. Dabei können die erste Schicht und die zweite Schicht mit unterschiedlichen Brechzahlen ausgebildet sein, so daß dadurch optische Effekte ausbildbar sind.

Bei der ersten Schicht und/oder der zweiten Schicht kann es sich auch um ein Polymer handeln, so daß beispielsweise die eine Schicht als ein elektrischer Leiter und die andere Schicht als ein elektrischer Isolator ausgebildet sein kann, wobei beide Schichten als transparente Schichten ausgebildet sein können.

Beispielsweise können die erste Schicht und/oder die zweite Schicht ein elektronisches Bauelement bilden, beispielsweise eine Antenne, einen Kondensator, eine Spule oder ein organisches Halbleiterbauelement. Wie weiter oben erläutert, können weitere Schichten vorgesehen sein, die mit dem erfindungsgemäßen Verfahren registergenau auf dem Mehrschichtkörper anordenbar sind.

Es kann auch vorgesehen sein, daß die Abfolge der Teilentfernung von Schichten oder Teildemetallisierungen und die Zuordnung zu den Strukturen in den ersten und in den zweiten Bereichen so gewählt ist, daß Bereiche ausgebildet werden, in denen unterschiedliche diffraktive Strukturen miteinander verschränkt sind. Es kann sich beispielsweise um ein erstes Kinegram® und um ein zweites Kinegram® handeln, die ein unterschiedliches Tiefen-zu-Breiten-Verhältnis aufweisen und die vor einem Hintergrund angeordnet sind. In diesem Beispiel kann vorgesehen sein, eine aufgedampfte Kupferschicht nur im Bereich des ersten Kinegram®-Sicherheitsmerkmals zu belassen, anschließend Aluminium ganzflächig aufzudampfen und durch geeignete Prozeßführung in den Hintergrundbereichen zu entfernen. Auf diese Weise sind zwei registerhaltig teilmetallisierte Designs ausgebildet, die sich in der dem Betrachter zugewandten Metallschicht unterscheiden.

Die in die Replizierschicht eingebrachten Reliefstrukturen können auch so gewählt sein, daß sie der Ausrichtung von Flüssigkristall(-Polymeren) dienen können. So kann dann die Replizierschicht und/oder die erste Schicht als Orientierungsschicht für Flüssigkristalle verwendet werden. In solche Orientierungsschichten werden beispielsweise rillenförmige Strukturen eingebracht, an denen sich die Flüssigkristalle ausrichten, bevor sie in dieser Lage durch Vernetzung oder in sonstiger Weise in ihrer Ausrichtung fixiert werden. Es kann vorgesehen sein, daß die vernetzte Flüssigkristallschicht die zweite Schicht bildet.

Die Orientierungsschichten können Bereiche aufweisen, in denen sich die Orientierungsrichtung der Struktur stetig ändert. Wird ein mittels einer solchen diffraktiven Struktur ausgebildeter Bereich durch einen Polarisator mit beispielsweise rotierender Polarisationsrichtung betrachtet, so lassen sich aufgrund der sich linear ändernden Polarisationsrichtung des Bereiches verschiedene gut erkennbare Sicherheitsmerkmale, beispielsweise Bewegungseffekte, erzeugen. Es kann auch vorgesehen sein, daß die Orientierungsschicht diffraktive Strukturen zur Orientierung der Flüssigkristalle aufweist, die lokal unterschiedlich so ausgerichtet sind, so daß die Flüssigkristalle unter polarisiertem Licht betrachtet eine Information, wie beispielsweise ein Logo, darstellen.

Es kann auch vorgesehen sein, daß die erste Schicht und/oder die zweite Schicht als farbige Schicht ausgebildet sind bzw. ist.

Farbige Bereiche können auch nach dem nachfolgend beschriebenen Verfahren ausgebildet werden. Es wird mittels des erfindungsgemäßen Verfahrens ein Mehrschichtkörper erzeugt, wobei eine eingefärbte photoempfindliche Schicht oder Waschmaske eingesetzt wird. Die Einfärbung kann dabei mittels Pigmenten oder löslichen Farbstoffen erfolgen.

Anschliessend wird durch die erste Schicht hindurch die photoempfindliche Schicht, mittels beispielsweise UV-Bestrahlung, belichtet und je nachdem, ob es sich um einen Positiv- oder der Negativresist handelt, in den ersten Bereichen ausgehärtet oder zerstört. Es können dabei auch Positiv- und Negativresistschichten nebeneinander aufgebracht sein und gleichzeitig belichtet werden. Die erste Schicht dient dabei als Maske und ist vorzugsweise in direktem Kontakt mit dem Photoresist angeordnet, so dass eine präzise Belichtung erfolgen kann.

Beim Entwickeln des Phototresists werden schließlich die nicht ausgehärteten Bereiche ausgewaschen oder die zerstörten Bereiche entfernt. Je nach verwendetem Photoresist liegt der entwickelte farbige Photoresist nun entweder genau in den Bereichen vor, in denen die erste Schicht für die UV-Strahlung durchlässig ist oder undurchlässig ist. Um die Beständigkeit der verbliebenen, gemäß der ersten Schicht strukturierten Photoresistschicht zu erhöhen, werden verbliebene Bereiche nach dem Entwickeln vorzugsweise nachgehärtet.

Die als Maske benutzte erste Schicht kann schließlich durch einen weiteren Aetzschritt soweit entfernt werden, sodass der Mehrschichtkörper für den Betrachter lediglich einen hochaufgelösten "Farbdruck" aus Photoresist aufweist, ansonsten jedoch transparent ist. Der Photoresist fungiert dabei als Ätzmaske.

Vorteilhafterweise können so hochauflösende Anzeigeelemente ausgebildet werden. Ohne den Rahmen der Erfindung zu verlassen, ist es möglich, unterschiedlich gefärbte Anzeigeelemente registergenau aufzubringen und sie beispielsweise in einem Bildpunktraster anzuordnen. Da mit einem Ausgangslayout der ersten Schicht unterschiedliche Mehrschichtkörper erzeugbar sind, indem beispielsweise unterschiedliche Belichtungs- und Ätzverfahren miteinander kombiniert werden bzw. nacheinander ausgeführt werden, ist die registergenaue Positionierung der nacheinander aufgebrachten Schichten bei Anwendung des erfindungsgemäßen Verfahrens trotz Erhöhung der Verfahrensschritte möglich.

Weitere optische Effekte können erzeugt werden, wenn die erste Schicht und/oder die zweite Schicht aus mehreren Teilschichten ausgebildet sind bzw. ist, insbesondere wenn die Teilschichten ein Dünnfilmschichtsystem bilden.

Es kann vorgesehen sein, daß die Teilschichten aus unterschiedlichen Materialien gebildet sind. Eine solche Ausbildung kann nicht nur für das vorstehend genannte Dünnfilmschichtsystem vorgesehen sein. Auf diese Weise können beispielsweise auch nanotechnologische Funktionselemente ausgebildet werden, z.B. kann aus zwei unterschiedlichen metallischen Schichten ein Bimetallschalter mit Abmessungen im µm-Bereich erzeugt werden.

In weiteren Ausgestaltungen kann vorgesehen sein, daß die erste Schicht und/oder die zweite Schicht ein optisches Muster bilden bzw. bildet. Es kann sich dabei um ein Rasterbild handeln.

Eine Rasterung der ersten Schicht ist auch dahingehend möglich, dass neben Rasterelementen, die mit einer Reflexionsschicht unterlegt sind und die - gegebenenfalls unterschiedliche - diffraktive Beugungsstrukturen aufweisen, neben Rasterelementen vorgesehen werden, die transparente Bereiche ohne Reflexionsschicht darstellen. Als Rasterung kann dabei eine amplituden- oder flächenmodulierte Rasterung gewählt sein. Durch eine Kombination von derartigen reflektiven/diffraktiven Bereichen und nicht-reflektiven, transparenten - unter Umständen ebenfalls diffraktiven - Bereichen lassen sich interessante optische Effekte erzielen. Wird ein solches Rasterbild beispielsweise in einem Fenster eines Wertdokuments angeordnet, so ist im Durchlicht ein transparentes Raserbild erkennbar. Im Auflicht ist dieses Rasterbild nur bei einem bestimmten Winkelbereich sichtbar, in den kein Licht durch die reflektierenden Flächen gebeugt/reflektiert wird. Weiter ist auch möglich, derartige Elemente nicht nur in einem transparenten Fenster einzusetzen, sondern auch auf einen farbigen Aufdruck aufzubringen. In einem bestimmten Winkelbereich ist der farbige Aufdruck beispielsweise in Form des Raserbildes sichtbar, während es in einem anderen Winkelbereich aufgrund des von den Beugungsstrukturen oder sonstigen (Makro-)Strukturen reflektierten Lichtes nicht sichtbar ist. Weiterhin ist es auch möglich, dass durch eine entsprechend gewählte Rasterung mehrere in ihrer Reflektivität abnehmende, auslaufende Reflexionsbereiche ausgebildet werden.

Es kann aber auch vorgesehen sein, die erste Schicht nicht vollständig zu entfernen, sondern nur ihre Schichtdicke zu verringern. Eine solche Ausführung kann besonders vorteilhaft sein, wenn Bereiche mit einander sich überlagernden Schichten ausgebildet werden sollen, beispielsweise um optische und/oder elektrische Eigenschaften zu variieren oder um dekorative Effekte auszubilden.

Bei dem weiter oben beschriebenen Verfahren, eine Belichtungsmaske mit Replizierschicht und erster Schicht zu verwenden, um die zweite Schicht zu strukturieren, kann vorgesehen sein, daß die Replizierschicht auf eine Trägerschicht einer Belichtungsmaske aufgebracht wird.

Weiter kann vorgesehen sein, die photoempfindliche Schicht oder photoempfindliche Waschmaske auf der zweiten Schicht anzuordnen und durch die zweite Schicht zu belichten. Wie bereits weiter oben ausgeführt, muß dazu die zweite Schicht nicht als transparente Schicht ausgebildet sein. Die zweite Schicht kann als opake Schicht ausgebildet sein, denn sie reduziert die Beleuchtungsstärke in allen Bereichen der photoempfindlichen Schicht oder der photoempfindlichen Waschmaske im gleichen Maße. Deshalb bleiben die in der Belichtungsmaske ausgebildeten Unterschiede der optischen Dichte erhalten und es wird ein getreues Abbild der Belichtungsmaske auf der photoempfindlichen Schicht oder der photoempfindlichen Waschmaske ausgebildet. Bei Verwendung einer Waschmaske kann vorgesehen sein, die zweite Schicht auf der Waschmaske als abschließende unterste Schicht anzuordnen, so daß die zweite Schicht nicht im Strahlengang zwischen der Belichtungsmaske und der Waschmaske angeordnet ist. In einem solchen Fall kann die zweite Schicht völlig undurchsichtig ausgebildet sein. Mit dem Abwaschen der belichteten Bereiche der Waschmaske kann die in diesen Bereichen angeordnete zweite Schicht entfernt werden. Vorteilhafterweise kann vorgesehen sein, die unter den nicht entfernten Bereichen der zweiten Schicht verbliebene Waschmaske durch das Aufbringen einer Schutzschicht gegen Umwelteinflüsse zu versiegeln und auf diese Weise einen besonders zuverlässigen Mehrschichtkörper auszubilden.

In einer weiteren vorteilhaften Ausgestaltung kann vorgesehen sein, die Belichtungsmaske mit dem Mehrschichtkörper zu verbinden. Wie bereits weiter oben ausgeführt, bieten die erfindungsgemäßen Verfahren vielfältige Möglichkeiten, Mehrschichtkörper auszubilden und die Verfahrensschritte sind nicht auf eine einmalige Anwendung begrenzt. Wenn also zunächst ein Mehrschichtkörper erzeugt worden ist, der als Belichtungsmaske ausgebildet ist, dann kann er wie eine herkömmliche Belichtungsmaske verwendet werden, beispielsweise als Belichtungsmaske in der Halbleiterfertigung. Eine solche Belichtungsmaske ist mit dem zweiten Mehrschichtkörper nicht dauerhaft verbunden und kann nach der Belichtung entfernt werden.

Es kann aber auch vorgesehen sein, auf der Belichtungsmaske den zweiten Mehrschichtkörper schichtweise aufzubauen. Wenn vorgesehen ist, die Belichtungsmaske nach der Belichtung oder zu einem späteren Zeitpunkt zu entfernen, kann zwischen der Belichtungsmaske und dem zweiten Mehrschichtkörper eine Trennschicht angeordnet sein, die ein solches Ablösen ermöglicht.

In einer weiteren vorteilhaften Ausgestaltung kann vorgesehen sein, die Belichtungsmaske dauerhaft mit dem zweiten Mehrschichtkörper zu verbinden und auf diese Weise einen dritten Mehrschichtkörper zu erzeugen, der als Endprodukt oder als Zwischenprodukt für den weiteren schichtweisen Aufbau eines noch komplexeren Mehrschichtkörpers vorgesehen sein kann.

Wie bereits dargestellt, kann es sich bei den Mehrschichtkörpern sowohl um flexible Folienelemente als auch um starre Elemente handeln, beispielsweise um Halbleiterchips oder um Oberflächen von elektronischen Geräten, wie beispielsweise Mobiltelefonen.

Die Erfindung wird anhand der Zeichnungen näher erläutert.

Es zeigen
- Fig. 1: eine schematische Schnittdarstellung eines ersten Ausführungsbeispiels eines Mehrschichtkörpers;
- Fig. 2: eine schematische Schnittdarstellung der ersten Fertigungsstufe des Mehrschichtkörpers in Fig. 1;
- Fig. 3: eine schematische Schnittdarstellung der zweiten Fertigungsstufe des Mehrschichtkörpers in Fig. 1;
- Fig. 4: eine schematische Schnittdarstellung der dritten Fertigungsstufe des Mehrschichtkörpers in Fig. 1;
- Fig. 5: eine schematische Schnittdarstellung der vierten Fertigungsstufe des Mehrschichtkörpers in Fig. 1;
- Fig. 5a: eine schematische Schnittdarstellung einer abgewandelten Ausführung der in Fig. 5 dargestellten Fertigungsstufe;
- Fig. 5b: eine schematische Schnittdarstellung der auf die Fertigungsstufe nach Fig. 5a folgenden Fertigungsstufe;
- Fig. 6: eine schematische Schnittdarstellung der fünften Fertigungsstufe des Mehrschichtkörpers in Fig. 1;
- Fig. 7: eine schematische Schnittdarstellung der sechsten Fertigungsstufe des Mehrschichtkörpers in Fig. 1;
- Fig. 8: eine schematische Schnittdarstellung der siebten Fertigungsstufe des Mehrschichtkörpers in Fig. 1;
- Fig. 9: eine schematische Schnittdarstellung der fünften Fertigungsstufe eines zweiten Ausführungsbeispiels des Mehrschichtkörpers in Fig. 1;
- Fig. 10: eine schematische Schnittdarstellung der sechsten Fertigungsstufe eines zweiten Ausführungsbeispiels des Mehrschichtkörpers in Fig. 1;
- Fig. 11: eine schematische Schnittdarstellung der siebten Fertigungsstufe eines zweiten Ausführungsbeispiels des Mehrschichtkörpers in Fig. 1;
- Fig. 12: eine schematische Schnittdarstellung der achten Fertigungsstufe eines zweiten Ausführungsbeispiels des Mehrschichtkörpers in Fig. 1;
- Fig. 13: eine schematische Schnittdarstellung eines zweiten Ausführungsbeispiels eines Mehrschichtkörpers;
- Fig. 14a bis 14 d: schematische Schnittdarstellungen der Herstellungsschritte eines dritten Ausführungsbeispiels eines Mehrschichtkörpers;
- Fig. 15: ein schematisches Diagramm von Ätzraten einer photoempfindlichen Schicht;
- Fig. 16a und 16b: ein erstes Anwendungsbeispiel eines Mehrschichtkörpers;
- Fig. 17a bis 17d: ein zweites Anwendungsbeispiel eines Mehrschichtkörpers.

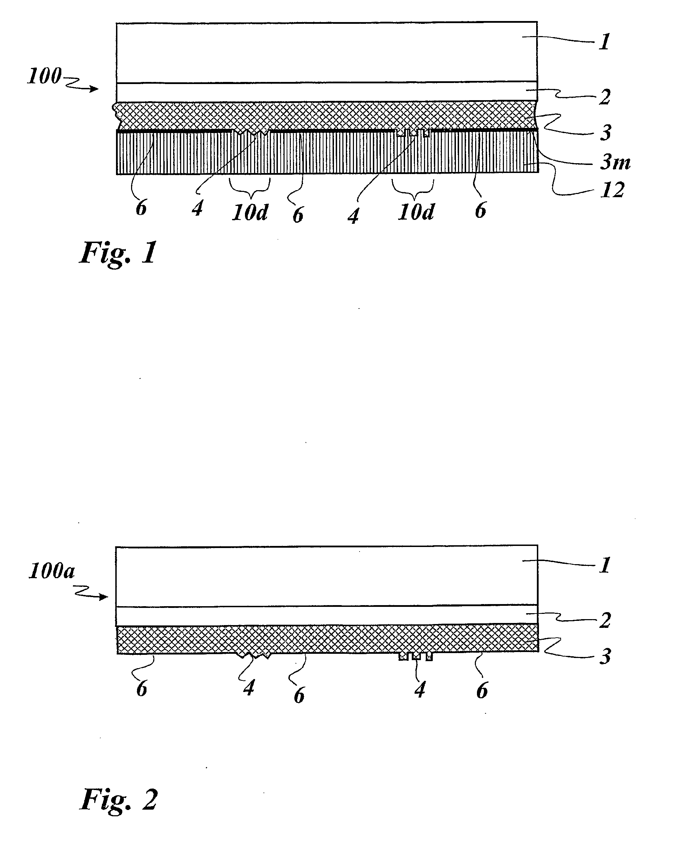

In Fig. 1 ist ein Mehrschichtkörper 100 dargestellt, bei dem auf einer Trägerfolie 1 eine funktionelle Schicht 2, eine Replizierschicht 3, eine metallische Schicht 3m und eine Kleberschicht 12 angeordnet sind. Bei der funktionellen Schicht 2 handelt es sich um eine Schicht, die vornehmlich der Erhöhung der mechanischen und chemischen Stabilität des Mehrschichtkörpers dient, die aber auch in bekannter Weise zur Erzeugung optischer Effekte ausgebildet sein kann, wobei auch vorgesehen sein kann, die Schicht aus mehreren Teilschichten auszubilden. Es kann sich auch um eine Schicht handeln, die aus Wachs ausgebildet ist oder die als Ablöseschicht ausgebildet ist. Es kann aber auch vorgesehen sein, auf diese Schicht zu verzichten und die Replizierschicht 3 direkt auf der Trägerfolie 1 anzuordnen. Weiter kann vorgesehen sein, die Trägerfolie 1 selbst als Replizierschicht auszubilden.

Der Mehrschichtkörper 100 kann ein Abschnitt einer Transferfolie, beispielsweise einer Heißprägefolie sein, der mittels der Kleberschicht 12 auf ein Substrat aufgebracht werden kann. Bei der Kleberschicht 12 kann es sich um einen Schmelzkleber handeln, der bei thermischer Einwirkung schmilzt und den Mehrschichtkörper dauerhaft mit der Oberfläche des Substrats verbindet.

Die Trägerfolie 1 kann als eine mechanisch und thermisch stabile Folie aus PET ausgebildet sein.

In die Replizierschicht 3 können Bereiche mit unterschiedlichen Strukturen mittels bekannter Verfahren abgeformt sein. Im dargestellten Ausführungsbeispiel handelt es sich dabei um Bereiche 4 mit diffraktiven Strukturen und spiegelnde Bereiche 6.

Die auf der Replizierschicht 3 angeordnete metallische Schicht 3m weist demetallisierte Bereiche 10d auf, die deckungsgleich mit den diffraktiven Strukturen 4 angeordnet sind. In den Bereichen 10d erscheint der Mehrschichtkörper 100 transparent bzw. teiltransparent.

Die Fig. 2 bis 8 zeigen nun die Fertigungsstufen des Mehrschichtkörpers 100. Gleiche Elemente wie in Fig. 1 sind mit gleichen Positionen bezeichnet.

Fig. 2 zeigt einen Mehrschichtkörper 100a, bei dem auf der Trägerfolie 1 die funktionelle Schicht 2 und die Replizierschicht 3 angeordnet sind.

Die Replizierschicht 3 ist durch bekannte Verfahren, wie beispielsweise Heißprägen, in ihrer Oberfläche strukturiert. Hierzu wird beispielsweise als Replizierschicht 3 ein thermoplastischer Replizierlack durch Drucken, Sprühen oder Verlacken aufgebracht und eine Reliefstruktur in den Replizierlack mittels eines beheizten Stempels oder einer beheizten Replizierwalze abgeformt.

Bei der Replizierschicht 3 kann es sich auch um einen UV-härtbaren Replizierlack handeln, der beispielsweise durch eine Replizierwalze strukturiert ist. Die Strukturierung kann aber auch durch eine UV-Bestrahlung durch eine Belichtungsmaske hindurch erzeugt sein. Auf diese Weise können die Bereiche 4 und 6 in die Replizierschicht 3 abgeformt sein. Bei dem Bereich 4 kann es sich beispielsweise um die optisch aktiven Bereiche eines Hologramms oder eines Kinegram^{®}-Sicherheitsmerkmals handeln.

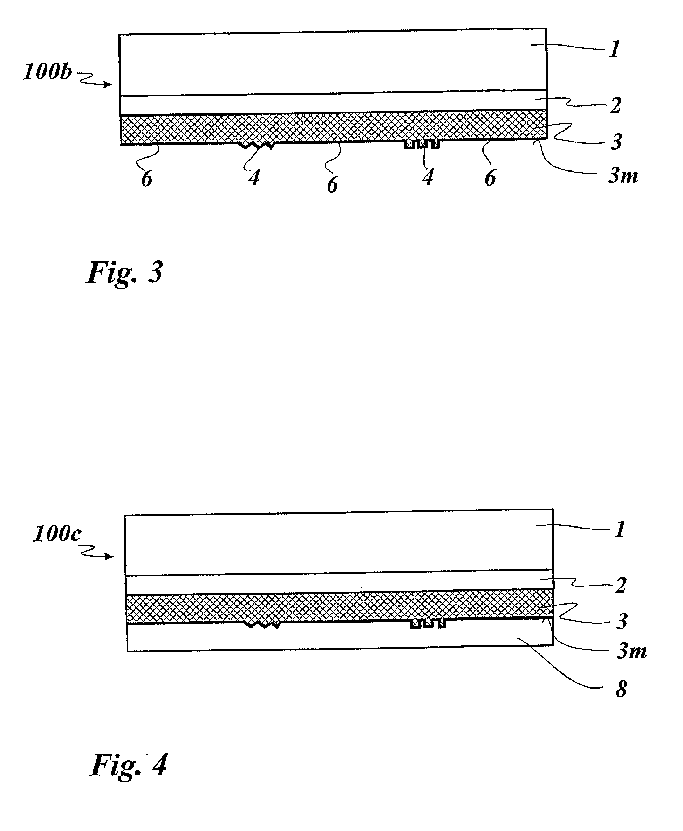

Fig. 3 zeigt nun einen Mehrschichtkörper 100b, der aus dem Mehrschichtkörper 100a in Fig. 2 gebildet ist, indem die metallische Schicht 3m auf die Replizierschicht 3 mit gleichmäßiger Flächendichte aufgebracht ist, beispielsweise durch Sputtern. Die metallische Schicht 3m weist in diesem Ausführungsbeispiel eine Schichtdicke von einigen 10 nm auf. Die Schichtdicke der metallischen Schicht 3m kann vorzugsweise so gewählt sein, daß die Bereiche 4 und 6 eine geringe Transmission aufweisen, beispielsweise zwischen 10% und 0,001%, d.h. eine optische Dichte zwischen 1 und 5, vorzugsweise zwischen 1,5 und 3. Die optische Dichte der metallischen Schicht 3m, d.h. der negative dekadische Logarithmus der Transmission, liegt demnach in den Bereichen 4 und 6 zwischen 1 und 3. Vorzugsweise kann vorgesehen sein, die metallische Schicht 3m mit einer optischen Dichte zwischen 1,5 und 2,5 auszubilden. Die Bereiche 4 und 6 erscheinen dem Auge des Betrachters deshalb undurchsichtig bzw. spiegelnd.

Besonders vorteilhaft ist es hier, die Schicht 3m in einer Schichtdicke aufzubringen, bei der die Schicht bei Aufbringung auf einer planaren Oberfläche weitgehend opak ist und eine optische Dichte von größer als 2 besitzt. Je dicker die auf die Replizierschicht 3 aufgebrachte metallische Schicht 3m ist, umso stärker wirkt sich die durch die in den Bereichen 4 vorgesehene diffraktive Struktur bewirkte Änderung der effektiven optischen Schichtdicke auf das Transmissionsverhalten der metallischen Schicht 3m aus. Untersuchungen haben gezeigt, dass die durch die diffraktive Struktur bewirkte Änderung der effektiven optischen Dicke der metallischen Schicht 3m in etwa proportional zur aufgedampften Schichtdicke und damit etwa proportional zur optischen Dichte ist. Da die optische Dichte den negativen Logarithmus der Transmission darstellt, wird so durch Erhöhung des Flächenauftrags an metallischen Material der Transmissionsunterschied zwischen den Bereichen 4 und 6 überproportional erhöht.

Allerdings unterscheiden sich die optischen Dichten der metallischen Schicht 3m in den Bereichen 4 und 6 so, daß sie in den Bereichen 4 vermindert ist gegenüber den Bereichen 6. Verantwortlich dafür ist die Oberflächenvergrößerung in den Bereichen 4 wegen des von Null verschiedenen Tiefen-zu-Breiten-Verhältnisses der Strukturelemente und die dadurch verringerte Dicke der metallischen Schicht. Das dimensionslose Tiefen-zu-Breiten-Verhältnis sowie die Spatialfrequenz sind kennzeichnende Merkmale für die Oberflächenvergrößerung vorzugsweise periodischer Strukturen. Eine solche Struktur bildet in periodischer Abfolge "Berge" und "Täler" aus. Als Tiefe ist hier der Abstand zwischen "Berg" und "Tal" bezeichnet, als Breite der Abstand zwischen zwei "Bergen". Je höher nun das Tiefen-zu-Breiten-Verhältnis ist, desto steiler sind die "Bergflanken" ausgebildet und desto dünner ist die auf den "Bergflanken" abgeschiedene metallische Schicht 3m ausgebildet. Dieser Effekt ist auch zu beobachten, wenn es sich um diskret verteilte "Täler" handelt, die in einem Abstand zueinander angeordnet sein können, der um ein Vielfaches größer als die Tiefe der "Täler" ist. In einem solchen Fall ist die Tiefe des "Tales" zur Breite des "Tales" ins Verhältnis zu setzen, um durch Angabe des Tiefen-zu-Breiten-Verhältnisses die Geometrie des "Tales" zutreffend zu beschreiben.

Bei der Ausbildung von Bereichen mit verringerter optischer Dichte ist es wichtig, die einzelnen Parameter in ihren Abhängigkeiten zu kennen und zweckmäßig zu wählen. Der Grad der Verringerung der optischen Dichte kann in Abhängigkeit vom Untergrund, von der Beleuchtung usw. variieren. Eine wichtige Rolle spielt dabei die Absorption des Lichtes in der Metallschicht. Beispielsweise reflektieren Chrom und Kupfer unter Umständen weitaus weniger.

Tabelle 1 zeigt den ermittelten Reflexionsgrad von zwischen Plastikfolien (Brechungsindex n = 1,5) angeordneten Metallschichten aus Ag, Al, Au, Cr, Cu, Rh und Ti bei einer Licht-Wellenlänge λ = 550 nm. Das Dickenverhältnis ε ist hierbei als Quotient aus der für den Reflexionsgrad R = 80% des Maximums Rₘₐₓ und der für den Reflexionsgrad R = 20% des Maximums Rₘₐₓ erforderlichen Dicke t der Metallschicht gebildet.

**Tabelle 1**

| **Metall** | **R_{Max}** | **t für 80 % R_{Max}** | **t für 20% R_{Max}** | **ε** | **h/d** |
|---|---|---|---|---|---|
| Ag | 0,944 | 31 nm | 9 nm | 3,4 | 1,92 |
| Al | 0,886 | 12 nm | 2,5 nm | 4,8 | 2,82 |
| Au | 0,808 | 40 nm | 12 nm | 3,3 | 1,86 |
| Rh | 0,685 | 18 nm | 4,5 nm | 4,0 | 2,31 |
| Cu | 0,557 | 40 nm | 12 nm | 3,3 | 1,86 |
| Cr | 0,420 | 18 nm | 5 nm | 3,6 | 2,05 |
| Ti | 0,386 | 29 nm | 8,5 nm | 3,3 | 1,86 |

Aus der heuristischen Betrachtung heraus haben Silber und Gold (Ag und Au), wie zu sehen ist, einen hohen maximalen Reflexionsgrad R_{Max} und erfordern ein relativ kleines Tiefen-zu-Breiten-Verhältnis zur Reduzierung der optischen Dichte der metallischen Schicht, in dem vorstehenden Beispiel zur Ausbildung von Transparenz. Aluminium (Al) hat zwar ein auch einen hohen maximalen Reflexionsgrad R_{Max}, erfordert aber ein höheres Tiefen-zu-Breiten-Verhältnis. Vorzugsweise kann deshalb vorgesehen sein, die Metallschicht aus Silber oder Gold auszubilden. Es kann aber auch vorgesehen sein, die Metallschicht aus anderen Metallen oder aus Metallegierungen auszubilden.

Tabelle 2 zeigt nun die Berechnungsergebnisse, gewonnen aus strengen Beugungsberechnungen für als lineare, sinusförmige Gitter mit einem Gitterabstand von 350 nm ausgebildete Reliefstrukturen mit unterschiedlichen Tiefen-zu-Breiten-Verhältnissen. Die Reliefstrukturen sind mit Silber beschichtet mit einer nominalen Dicke t₀ = 40 nm. Das Licht, das auf die Reliefstrukturen auftrifft, hat die Wellenlänge λ = 550 nm (grün) und ist TE-polarisiert bzw. TMpolarisiert.

**Tabelle 2**

| Tiefen-zu-Breiten-Verhältnis | Gitterabstand in nm | Tiefe in nm | Reflexionsgrad (0R) TE | Transparenzgrad (0T) TE | Reflexionsgrad (0R) TM | Transparenzgrad (0T) TM |
|---|---|---|---|---|---|---|
| 0 | 350 | 0 | 84,5 % | 9,4 % | 84,5 % | 9,4 % |
| 0,3 | 350 | 100 | 78,4 % | 11,1 % | 50,0 % | 21,0 % |
| 0,4 | 350 | 150 | 42,0 % | 45,0 % | 31,0 % | 47,0 % |
| 1,1 | 350 | 400 | 2,3 % | 82,3 % | 1,6 % | 62,8 % |
| 2,3 | 350 | 800 | 1,2 % | 88,0 % | 0,2 % | 77,0 % |

Wie sich zeigte, ist insbesondere der Transparenzgrad bzw. die Transmission außer vom Tiefen-zu-Breiten-Verhältnis abhängig von der Polarisation des aufgestrahlten Lichtes. Diese Abhängigkeit ist in Tabelle 2 für das Tiefen-zu-Breiten-Verhältnis d/h = 1,1 dargestellt. Es kann vorgesehen sein, diesen Effekt für die selektive Ausbildung weiterer Schichten zu nutzen.

Weiterhin zeigte sich, daß der Transparenzgrad bzw. der Reflexionsgrad der Metallschicht 3m wellenlängenabhängig ist. Dieser Effekt ist besonders gut für TEpolarisiertes Licht ausgeprägt.

Weiterhin zeigte sich, daß der Transparenzgrad bzw. die Transmission abnimmt, wenn der Einfallswinkel des Lichtes sich vom normalen Einfallswinkel unterscheidet, d.h. der Transparenzgrad nimmt ab, wenn das Licht nicht senkrecht einfällt. Das bedeutet, daß die Metallschicht 3m nur in einem begrenzten Einfallskegel des Lichtes transparent bzw. weniger opak als in den spiegelnden Bereichen 6 ausgebildet sein kann. Es kann also vorgesehen sein, daß die Metallschicht 3m bei schräger Beleuchtung opak ausgebildet ist, wobei auch dieser Effekt für die selektive Ausbildung weiterer Schichten nutzbar ist.

Neben dem Tiefen-zu-Breiten-Verhältnis einer Struktur wird die Veränderung der optischen Dichte auch durch die Spatialfrequenz der Struktur beeinflußt. So hat sich weiter gezeigt, daß eine Veränderung des Transmissionsverhaltens einer auf eine Struktur aufgebrachten Schicht erzielt werden kann, wenn das Produkt aus Spatialfrequenz und Relieftiefe in einem ersten Bereich der Struktur größer als das Produkt aus Spatialfrequenz und Relieftiefe in einem zweiten Bereich der Struktur ist.

Die Ausbildung von Bereichen unterschiedlicher Transparenz bzw. Transmission kann aber auch durch andere Effekte erreicht werden, beispielsweise durch
- die Polarisationsabhängigkeit der Transmission infolge unterschiedlich orientierter Strukturen;
- den Formfaktor der Strukturen, d.h. Strukturen mit rechteckförmigem, sinusförmigem, sägezahnförmigem oder sonstigem Profil können bei gleichem Produkt aus Spatialfrequenz und Relieftiefe eine unterschiedliche Transmission aufweisen;
- gerichtetes Aufdampfen der ersten Schicht in Kombination mit speziellen Strukturen bzw. Strukturkombinationen oder Strukturanordnungen.

Wenn es sich bei der ersten Struktur um eine Struktur mit einem stochastischen Profil handelt, beispielsweise um eine Mattstruktur, können Korrelationslänge, Rauhtiefe und statistische Verteilung des Profils typische Kenngrößen sein, welche die Transmission beeinflussen.

Zur Ausbildung von Bereichen mit unterschiedlicher Transparenz oder Transmission ist es so auch möglich, im ersten Bereich und im zweiten Bereich Reliefstrukturen zu verwenden, die sich in ein oder mehreren der oben aufgeführten Parameter unterscheiden.

Fig. 4 zeigt einen Mehrschichtkörper 100c, gebildet aus dem in Fig. 3 dargestellten Mehrschichtkörper 100b und einer photoempfindlichen Schicht 8. Dabei kann es sich um eine organische Schicht handeln, die durch klassische Beschichtungsverfahren, wie Tiefdruck, in flüssiger Form aufgebracht wird. Es kann auch vorgesehen sein, daß die photoempfindliche Schicht aufgedampft wird oder als trockener Film auflaminiert wird.

Bei der photoempfindlichen Schicht 8 kann es sich beispielsweise um einen positiven Photoresist, wie AZ 1512 oder AZ P4620 von Clariant oder S1822 von Shipley, handeln, welcher in einer Flächendichte von 0,1g/m² bis 50g/m² auf die Metallschicht 3m aufgebracht wird. Die Schichtdicke richtet sich nach der gewünschten Auflösung und dem Prozeß. So sind bei Lift-off-Prozessen eher dickere Schichten mit einer Schichtdicke >1 µm gefragt, entsprechend einer Flächendichte von ca. 1g/m². Bevorzugte Flächengewichte liegen im Bereich von 0,2 g/m² bis 10g/m².

Der Auftrag kann ganzflächig vorgesehen sein. Es kann aber auch ein Auftrag in Teilbereichen vorgesehen sein, beispielsweise in Bereichen, die außerhalb der vorstehend genannten Bereiche 4 und 6 angeordnet sind. Es kann sich dabei um Bereiche handeln, die nur relativ grob im Register zum Design angeordnet sein müssen, beispielsweise um dekorative bildliche Darstellungen, wie z.B. Zufallsmuster oder aus wiederholten Bildern oder Texten gebildete Muster.

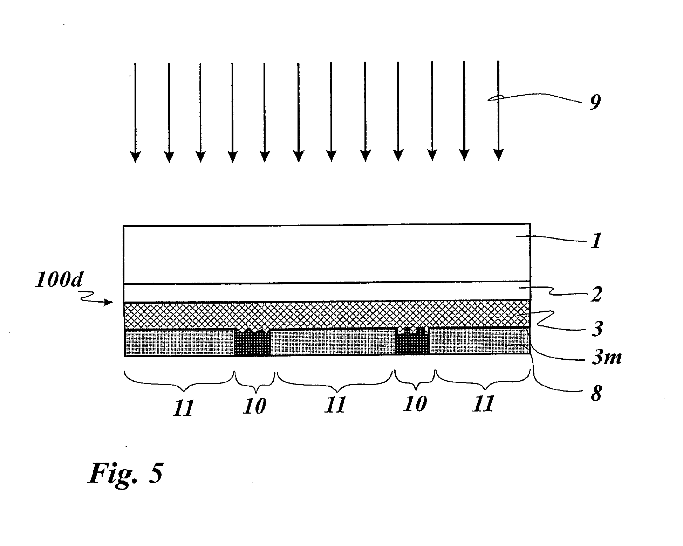

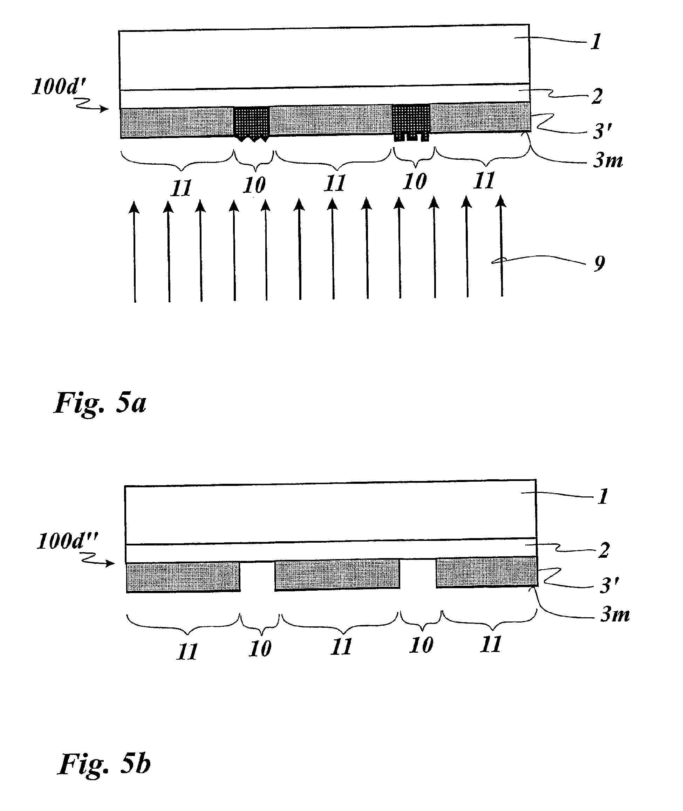

Fig. 5 zeigt nun einen Mehrschichtkörper 100d, der durch die Belichtung des Mehrschichtkörpers 100c in Fig. 4 durch die Trägerfolie 1 hindurch gebildet ist. Zur Belichtung kann UV-Licht 9 vorgesehen sein. Weil nun, wie vorstehend beschrieben, die mit diffraktiven Strukturen mit einem Tiefen-zu-Breiten-Verhältnis größer als Null versehenen Bereiche 4 eine geringere optische Dichte aufweisen als die spiegelnden Bereiche 6, werden durch die UV-Bestrahlung in der photoempfindlichen Schicht 8 stärker belichtete Bereiche 10 erzeugt, die sich von geringer belichteten Bereichen 11 in ihren chemischen Eigenschaften unterscheiden.

In dem in Fig. 5 dargestellten Ausführungsbeispiel ist eine homogene Beleuchtung vorgesehen, die in allen Bereichen des Mehrschichtkörpers 100d mit gleicher Intensität ausgebildet ist. Es kann jedoch auch eine partielle Beleuchtung vorgesehen, beispielsweise um
a) Strukturen mit hohem Tiefen-zu-Breiten-Verhältnis als Designelemente zu belassen und nicht zu demetallisieren;
b) eine zusätzliche Information einzubringen, beispielsweise durch eine bandförmige Maske, die während der Belichtung mit dem Mehrschichtkörper 100d mitläuft,
c) eine individuelle Information, wie beispielsweise eine Laufnummer, einzubringen. Es kann dabei vorgesehen sein, über eine kurzzeitige Belichtung vermittels eines programmierbaren räumlichen Lichtmodulators oder eines gesteuerten Lasers eine Kennzeichnung einzubringen. Auf diese Weise werden also nur dort demetallisierte Bereiche ausgebildet, in denen das Tiefen-zu-Breiten-Verhältnis geeignet ausgebildet ist und in denen das alphanumerische Kennzeichen vorgesehen ist.

Wellenlänge und Polarisation des Lichts sowie der Einfallswinkel des Lichts sind Beleuchtungsparameter, die es erlauben, gezielt Strukturen hervorzuheben und selektiv zu bearbeiten.

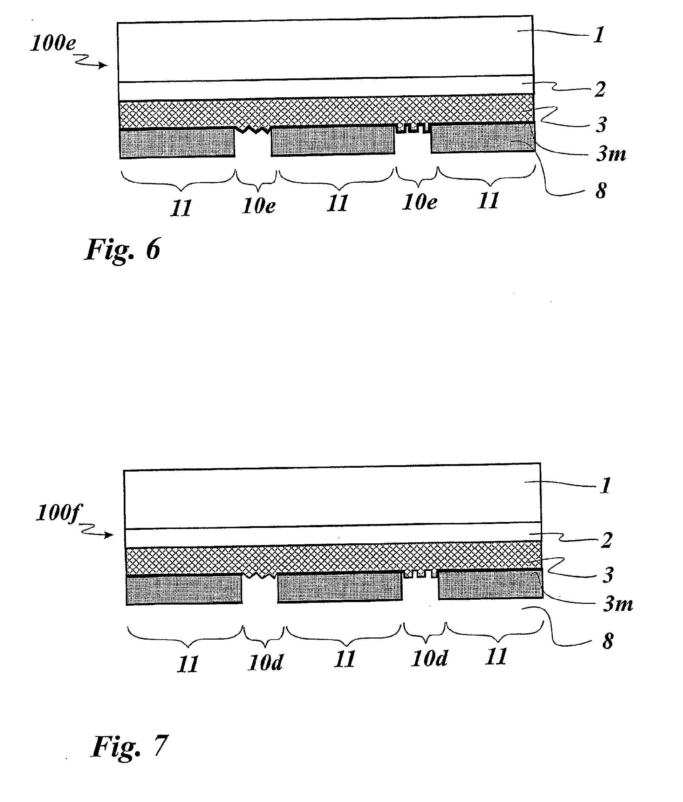

Auch chemische Eigenschaften können dazu genutzt werden. Die Bereiche 10 und 11 können sich beispielsweise durch ihre Löslichkeit in Lösungsmitteln unterscheiden. Auf diese Weise kann die photoempfindliche Schicht 8 nach der Belichtung mit UV-Licht "entwickelt" werden, wie im weiteren in Fig. 6 gezeigt ist. Die "Entwicklung" der photoempfindlichen Schicht erzeugt aus dem in der photoempfindlichen Schicht durch Belichtung erzeugten latenten Bild durch die Entfernung von Bereichen ein maskenförmiges sichtbares Bild der mit Bereichen unterschiedlicher optischer Dichte ausgebildeten metallischen Schicht 3m.

Wenn in den Bereichen 4 zur Ausbildung einer dem menschlichen Auge sichtbaren Transparenz üblicherweise ein Tiefen-zu-Breiten-Verhältnis > 0,3 vorgesehen ist, hat sich überraschenderweise gezeigt, daß das für die Entwicklung der photoempfindlichen Schicht ausreichende Tiefen-zu-Breiten-Verhältnis wesentlich kleiner sein kann. Es ist auch nicht notwendig, die metallische Schicht 3m so dünn auszubilden, daß die Bereiche 4 bei visueller Betrachtung transparent erscheinen. Die bedampfte Trägerfolie kann also opak ausgebildet sein, denn die verringerte Transparenz kann durch eine erhöhte Belichtungsdosis der photoempfindlichen Schicht 8 ausgeglichen werden. Weiter ist zu berücksichtigen, daß die Belichtung der photoempfindlichen Schicht typischerweise im nahen UV-Bereich vorgesehen ist, so daß der visuelle Betrachtungseindruck für die Beurteilung der optischen Dichte nicht entscheidend ist.

In den Fig. 5a und 5b ist ein abgewandeltes Ausführungsbeispiel dargestellt. Bei dem Mehrschichtkörper 100d' in Fig. 5a ist die in Fig. 5 dargestellte photoempfindliche Schicht 8 nicht vorgesehen. Statt dessen ist eine Replizierschicht 3' vorgesehen, bei der es sich um eine photoempfindliche Waschmaske handelt. Der Mehrschichtkörper 100d' wird von unten belichtet, wodurch in den stärker belichteten Bereichen 10 die Replizierschicht 3' so verändert wird, daß sie auswaschbar ist.

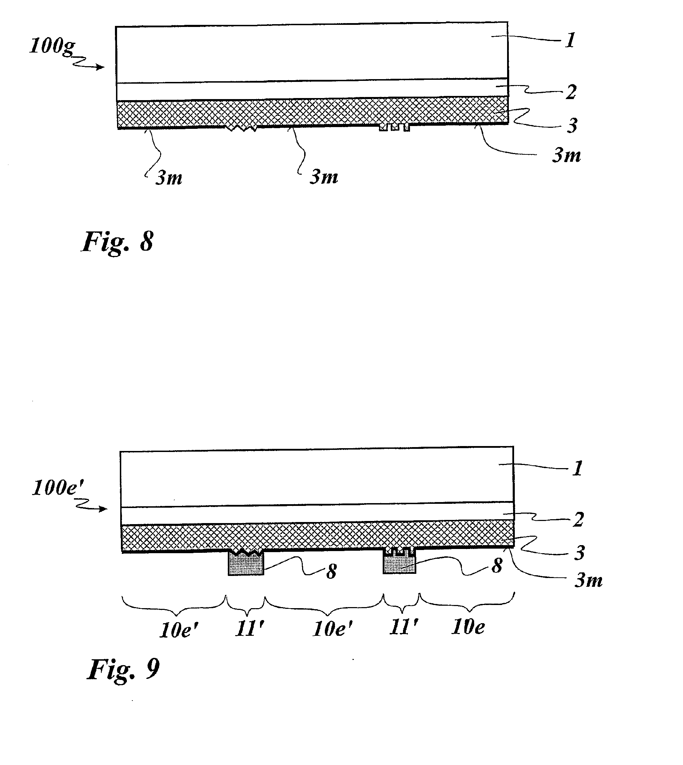

Fig. 5b zeigt nun einen Mehrschichtkörper 100d", der funktionell dem weiter unten in Fig. 8 dargestellten Mehrschichtkörper entspricht. Allerdings ist in den Bereichen 10 mit dem Waschprozeß nicht nur die metallische Schicht 3m entfernt, sondern auch die Replizierschicht 3'. Dadurch ist in diesen Bereichen gegenüber dem in Fig. 8 dargestellten Mehrschichtkörper Transparenz ausgebildet und es sind weniger Fertigungsschritte benötigt.

Fig. 6 zeigt den "entwickelten" Mehrschichtkörper 100e, der aus dem Mehrschichtkörper 100d durch Einwirkung eines auf die Oberfläche der belichteten photoempfindlichen Schicht 8 aufgebrachten Lösungsmittels gebildet ist. Dadurch sind nun Bereiche 10e ausgebildet, in denen die photoempfindliche Schicht 8 entfernt ist. Es handelt sich bei den Bereichen 10e um die in Fig. 3 beschriebenen Bereiche 4 mit einem Tiefen-zu-Breiten-Verhältnis größer Null der Strukturelemente. In Bereichen 11 ist die photoempfindlichen Schicht 8 erhalten, weil es sich dabei um die in Fig. 3 beschriebenen Bereiche 6 handelt, in denen die Strukturelemente ein Tiefen-zu-Breiten-Verhältnis gleich Null aufweisen.

In dem in den Fig. 6 dargestellten Ausführungsbeispiel ist die photoempfindliche Schicht 8 aus einem positiven Photoresist ausgebildet. Bei einem solchen Photoresist sind die belichteten Bereiche im Entwickler löslich. Im Gegensatz dazu sind bei einem negativen Photoresist die unbelichteten Bereiche im Entwickler löslich, wie weiter unten in dem in Fig. 9 bis 12 dargestellten Ausführungsbeispiel ausgeführt.

Nunmehr kann, wie anhand eines Mehrschichtkörpers 100f in Fig. 7 gezeigt, die metallische Schicht 3m in den Bereichen 10e entfernt werden, die nicht durch die als Ätzmaske dienende entwickelte photoempfindliche Schicht vor dem Angriff des Ätzmittels geschützt sind. Bei dem Ätzmittel kann es sich beispielsweise um eine Säure oder Lauge handeln. Auf diese Weise werden die auch in Fig. 1 gezeigten demetallisierten Bereiche 10d ausgebildet.

Auf diese Weise kann also die metallische Schicht 3m ohne zusätzlichen technologischen Aufwand registergenau demetallisiert werden. Dazu sind keine aufwendigen Vorkehrungen zu treffen, wie beispielsweise beim Aufbringen einer Ätzmaske durch Maskenbelichtung oder Druck. Bei einem solchen herkömmlichen Verfahren sind Toleranzen > 0,2 mm üblich. Mit dem erfindungsgemäßen Verfahren sind dagegen Toleranzen im µm-Bereich bis in den nm-Bereich möglich, d.h. Toleranzen, die nur durch das zur Strukturierung der Replizierschicht gewählte Replizierverfahren und die Origination bestimmt sind.

Es kann vorgesehen sein, die metallische Schicht 3m als Abfolge verschiedener Metalle auszubilden und die Unterschiede der physikalischen und/oder chemischen Eigenschaften der metallischen Teilschichten zu nutzen. Beispielsweise kann vorgesehen sein, als erste metallische Teilschicht Aluminium abzuscheiden, das eine hohe Reflexion aufweist und deshalb bei Betrachtung des Mehrschichtkörpers von der Trägerseite her reflektierende Bereiche gut hervortreten läßt. Als zweite metallische Teilschicht kann Chrom abgeschieden sein, das eine hohe chemische Resistenz gegenüber verschiedenen Ätzmitteln aufweist. Der Ätzvorgang der metallischen Schicht 3m kann nun in zwei Stufen vorgesehen sein. Es kann vorgesehen sein, in der ersten Stufe die Chromschicht zu ätzen, wobei die entwickelte photoempfindliche Schicht 8 als Ätzmaske vorgesehen ist und anschließend in der zweiten Stufe die Aluminiumschicht zu ätzen, wobei die Chromschicht nun als Ätzmaske vorgesehen ist. Solche Mehrschichtsysteme erlauben eine größere Flexibilität bei der Auswahl der im Fertigungsprozeß verwendeten Materialien für den Photoresist, die Ätzmittel für den Photoresist und die metallische Schicht.

Fig. 8 zeigt die optionale Möglichkeit, die photoempfindliche Schicht nach dem in Fig. 7 dargestellten Fertigungsschritt zu entfernen. In Fig. 8 ist ein Mehrschichtkörper 100g dargestellt, gebildet aus der Trägerfolie 1, der funktionellen Schicht 2, der Replizierschicht 3 und der strukturierten metallischen Schicht 3m.

Durch anschließendes Auftragen der Kleberschicht 12 kann der Mehrschichtkörper 100g in den in Fig. 1 dargestellten Mehrschichtkörper 100 überführt werden.

In den Fig. 9 ist nun ein zweites Ausführungsbeispiel eines Mehrschichtkörpers 100e dargestellt, bei dem die photoempfindliche Schicht 8 aus einem negativen Photoresist ausgebildet ist. Wie in Fig. 9 zu erkennen, weist ein Mehrschichtkörper 100e' Bereiche 10e' auf, in denen die unbelichtete photoempfindliche Schicht 8 durch die Entwicklung entfernt ist. Bei den Bereichen 10e' handelt es sich um opake Bereiche der metallischen Schicht 3m (s. Pos. 6 in Fig. 3). In Bereichen 11' ist die belichtete photoempfindliche Schicht 8 nicht entfernt, es handelt sich dabei um weniger opake Bereiche der metallischen Schicht 3m (s. Pos. 4 in Fig. 3), also um Bereiche mit geringerer optischer Dichte, als die Bereiche 10e' aufweisen.

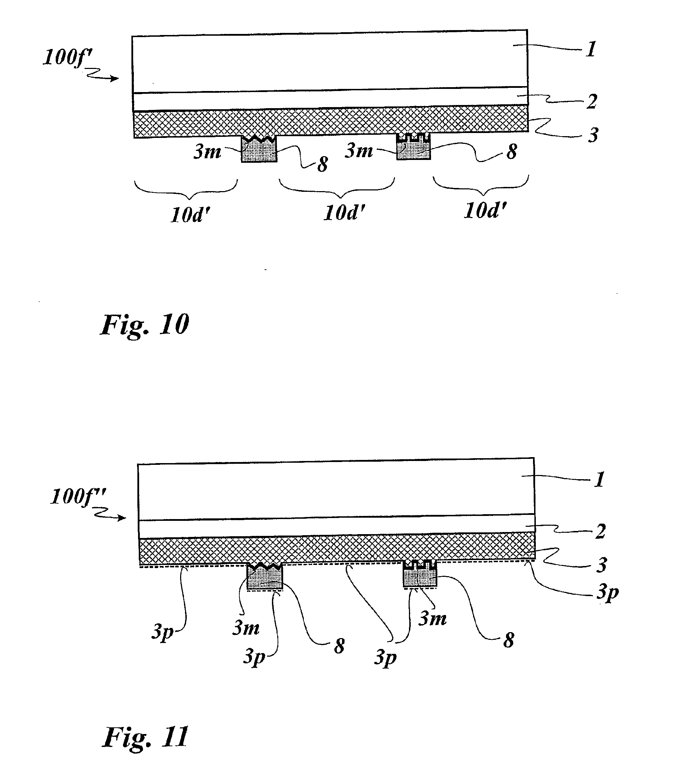

In Fig. 10 ist ein Mehrschichtkörper 100f' dargestellt, der durch Entfernen der metallischen Schicht 3m durch einen Ätzprozeß aus dem Mehrschichtkörper 100e' (Fig. 9) gebildet ist. Die entwickelte photoempfindliche Schicht 8 ist dafür als Ätzmaske vorgesehen, die in den Bereichen 10e' (Fig. 9) entfernt ist, so daß das Ätzmittel dort die metallische Schicht 3m zersetzt. Auf diese Weise sind Bereiche 10d' gebildet, die keine metallische Schicht 3m mehr aufweisen.

Wie in Fig. 11 dargestellt, ist nun aus dem Mehrschichtkörper 100f' ein Mehrschichtkörper 100f" gebildet mit einer zweiten Schicht 3p, welche die freigelegte Replizierschicht 3 in den Bereichen 10d' bedeckt. Bei der Schicht 3p kann es sich um ein Dielektrikum handeln, wie TiO2 oder ZnS, oder um ein Polymer. Eine solche Schicht kann beispielsweise flächig aufgedampft sein, wobei vorgesehen sein kann, diese Schicht aus mehreren übereinander angeordneten Dünnschichten auszubilden, die sich beispielsweise in ihrer Brechzahl unterscheiden können und auf diese Weise im aufscheinenden Licht Farbeffekte ausbilden können. Eine Farbeffekte aufweisende Dünnschicht kann beispielsweise aus drei Dünnschichten mit High-Low-High-Index-Verlauf gebildet sein. Der Farbeffekt erscheint im Vergleich mit metallischen reflektierenden Schichten weniger auffällig, was beispielsweise vorteilhaft ist, wenn auf diese Weise Muster auf Pässen oder Identcards ausgebildet werden. Die Muster können dem Betrachter beispielsweise als transparentes Grün oder Rot erscheinen.

Polymerschichten können beispielsweise als organische Halbleiterschichten ausgebildet sein. Durch Kombination mit weiteren Schichten kann so ein organisches Halbleiterbauelement gebildet werden.

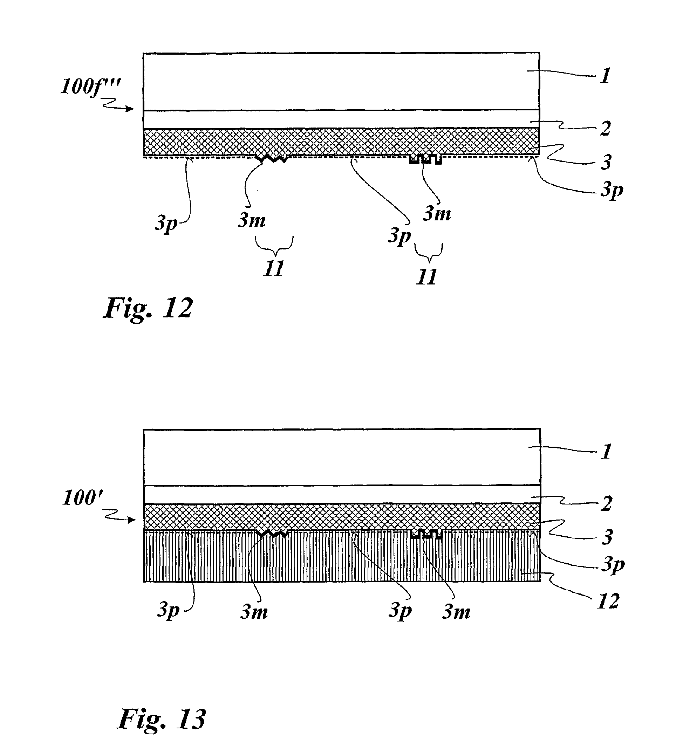

Fig. 12 zeigt nun einen Mehrschichtkörper 100f''', gebildet aus dem Mehrschichtkörper 100f" (Fig. 11) nach der Entfernung der restlichen photoempfindlichen Schicht. Es kann sich dabei um einen "Lift-off"-Prozeß handeln. Auf diese Weise wird dort zugleich die im vorigen Schritt aufgebrachte zweite Schicht 3p wieder entfernt. Nunmehr sind also auf dem Mehrschichtkörper 100f''' benachbarte Bereiche mit Schichten 3p und 3m gebildet, die sich beispielsweise in ihrer optischen Brechzahl und/oder ihrer elektrischen Leitfähigkeit voneinander unterscheiden können.

Es kann vorgesehen sein, die metallische Schicht 3m galvanisch zu verstärken und auf diese Weise die Bereiche 11 beispielsweise als Bereiche mit besonders guter elektrischer Leitfähigkeit auszubilden.

Es kann auch vorgesehen sein, die Bereiche 11 transparent auszubilden und dazu die metallische Schicht 3m durch Ätzen zu entfernen. Es kann ein Ätzmittel vorgesehen sein, das die in den übrigen Bereichen aufgebrachte Schicht 3p nicht angreift. Es kann aber auch vorgesehen sein, das Ätzmittel nur so lange einwirken zu lassen, bis die metallische Schicht entfernt ist.

Es kann weiter vorgesehen sein, anschließend auf den Mehrschichtkörper 100f''' (Fig. 12) eine dritte Schicht aufzubringen, die aus einem Dielektrikum oder einem Polymer ausgebildet sein kann. Das kann mit den weiter oben beschriebenen Verfahrensschritten geschehen, indem noch einmal eine photoempfindliche Schicht aufgebracht wird, die nach Belichtung und Entwicklung den Mehrschichtkörper 100f''' außerhalb der Bereiche 11 bedeckt. Nun kann die dritte Schicht wie weiter oben aufgebracht werden und anschließend die Überreste der photoempfindlichen Schicht entfernt werden und damit zugleich in diesen Bereichen die dritte Schicht. Auf diese Weise können beispielsweise Schichten organischer Halbleiterbauelemente besonders fein und registergenau strukturiert werden.

Fig. 13 zeigt nun einen Mehrschichtkörper 100', der aus dem Mehrschichtkörper 100f''' (Fig. 12) durch das Hinzufügen der in Fig. 1 dargestellten Kleberschicht 12 gebildet ist. Der Mehrschichtkörper 100' ist wie der in Fig. 1 dargestellte Mehrschichtkörper 100 durch Verwendung der gleichen Replizierschicht 3 hergestellt worden. Es ist also mit dem erfindungsgemäßen Verfahren möglich, ausgehend von einem einheitlichen Layout unterschiedlich ausgebildete Mehrschichtkörper zu erzeugen.

Das erfindungsgemäße Verfahren kann ohne Qualitätseinbuße weiter fortgesetzt werden, um weitere Schichten registergenau zu strukturieren. Dazu kann vorgesehen sein, weitere optische Effekte, wie Totalreflexion, Polarisation und spektrale Durchlässigkeit der zuvor aufgebrachten Schichten zur Ausbildung von Bereichen unterschiedlicher optischer Dichte zu nutzen, um registergenaue Belichtungsmasken auszubilden.

Es kann auch vorgesehen sein, unterschiedliche lokale Absorptionsfähigkeit durch übereinander angeordnete Schichten auszubilden und durch lasergestützte thermische Ablation Belichtungs- bzw. Ätzmasken auszubilden.

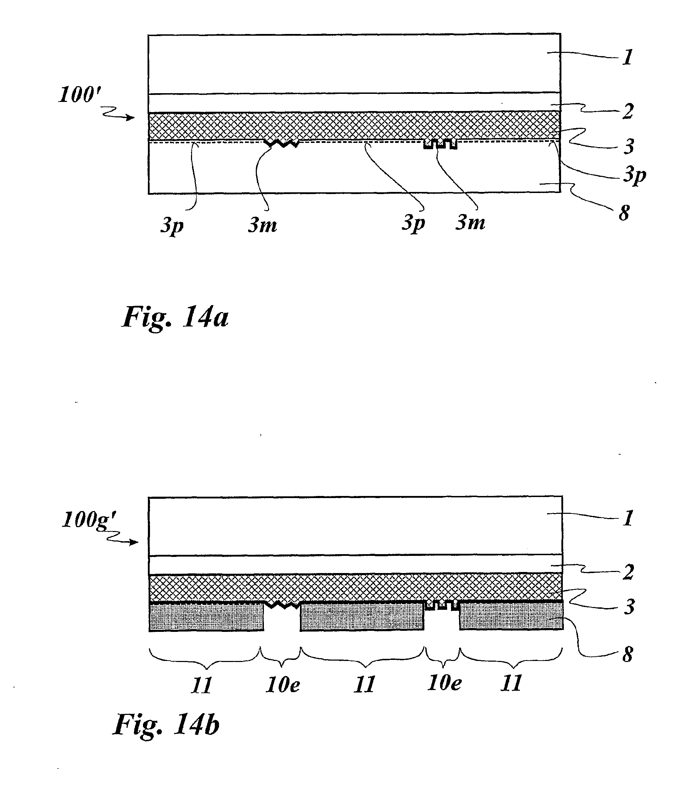

Die Fig. 14a bis 14d zeigen nun an einem Ausführungsbeispiel, wie von dem in Fig. 12 dargestellten Mehrschichtkörper 100f''' die in den Bereichen 11 angeordnete metallische Schicht 3m registergenau entfernt werden kann und durch eine nichtmetallische Schicht 3p' registergenau ersetzt werden kann. Bei der Schicht 3p' kann es sich um eine dielektrische Schicht handeln, die sich in ihrer optischen Brechzahl von der Schicht 3p unterscheidet.

Fig. 14a zeigt einen Mehrschichtkörper 100g, bei dem die metallische Schicht 3m in den Bereichen 4 so ausgebildet ist, daß sie eine unterschiedliche optische Dichte zu der Schicht 3p in den Bereichen 6 aufweist. Eine photoempfindliche Schicht 8 überdeckt die auf der Replizierschicht 3 angeordneten Bereiche 3p und 3m.

Fig. 14b zeigt nun einen Mehrschichtkörper 100g', der durch Belichtung und Entwicklung der photoempfindlichen Schicht 8, wie weiter oben in Fig. 5 und 6 beschrieben, erhalten ist. Die mit der entwickelten photoempfindlichen Schicht 8 bedeckten Bereiche 11 bildet eine Ätzmaske, so daß in den Bereichen 10e, in denen die photoempfindliche Schicht nach dem Entwickeln entfernt ist, die metallische Schicht 3m durch Ätzen entfernt werden kann.

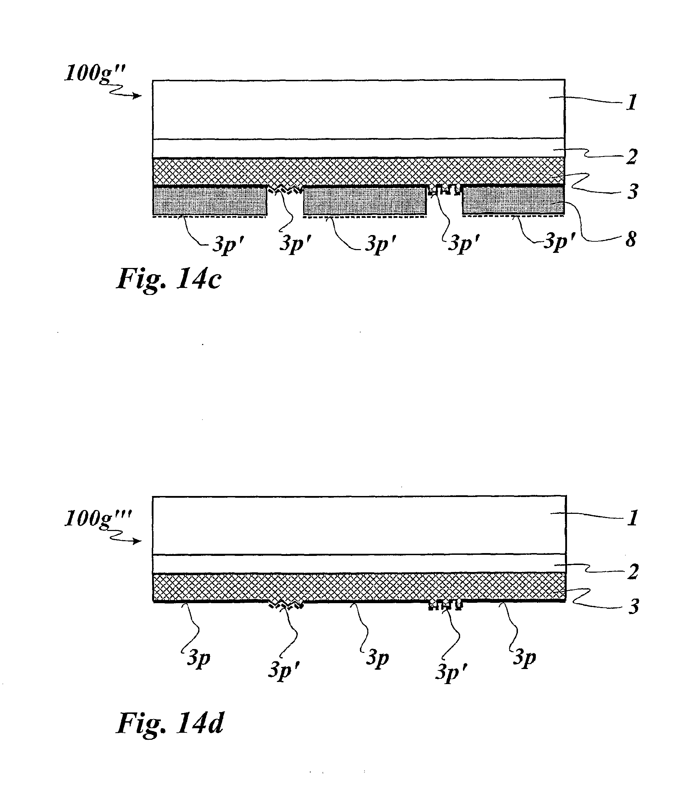

Fig. 14c zeigt nach einem weiteren Verfahrensschritt einen Mehrschichtkörper 100g", auf dem nunmehr eine Schicht 3p' vollflächig aufgetragen ist, die beispielsweise als Dielektrikum ausgebildet sein kann. Die Schicht 3p' kann auch als Dünnschichtsystem aus mehreren nacheinander aufgetragenen Schichten ausgebildet sein, wodurch die Schicht 3p' in bekannter Weise Farbwechseleffekte ausbilden kann.

Fig. 14d zeigt nun nach dem Entfernen der Überreste der photoempfindlichen Schicht 8 und der auf ihr angeordneten Bereiche der Schicht 3p' einen Mehrschichtkörper 100g''', der beispielsweise durch Hinzufügen einer Kleberschicht, wie weiter oben in Fig. 13 beschrieben, zu einem kompletten Mehrschichtkörper ausgebildet werden kann.

Der Mehrschichtkörper 100g''' weist auf der Replizierschicht 3 Bereiche, die mit der Schicht 3p bedeckt sind und Bereiche, die mit der Schicht 3p' bedeckt sind, auf.

Da es sich bei den Schichten 3p und/oder 3p' um Dünnschichtsysteme handeln kann, können sie, wie bereits weiter oben dargestellt, Farbwechseleffekte ausbilden. Dabei kann beispielsweise vorgesehen sein, die Schicht 3p, welche in dem Ausführungsbeispiel in Fig. 14d die Bereiche der Replizierschicht 3 mit einem Tiefen-zu-Breiten-Verhältnis größer Null überdeckt, als Dünnschichtsystem auszubilden. Auf diese Weise können filigrane Muster, wie Guillochen, als Sicherheitsmerkmale ausgebildet werden, die sich dezent von ihrer Umgebung abheben und darunter angeordnete Darstellungen noch gut erkennen lassen.

Das anhand der Fig. 14a bis 14d beschriebene Verfahren läßt sich zum Aufbringen weiterer Schichten anwenden. Weil es sich bei den Schichten 3p und 3p' um dünne Schichten in der Größenordnung einiger µm bzw. nm handelt, sind die in die Replizierschicht 3 eingebrachten Strukturen erhalten, so daß beispielsweise eine weitere metallische Schicht aufgebracht werden kann, die in den Bereichen der Replizierschicht 3 mit einem Tiefen-zu-Breiten-Verhältnis größer Null mit geringerer optischer Dichte ausgebildet ist als in den Bereichen mit einem Tiefen-zu-Breiten-Verhältnis gleich Null. Damit kann die weitere metallische Schicht als eine Maskenschicht verwendet werden, die mit den vorstehend beschriebenen Verfahrensschritten partiell entfernt werden kann oder die als temporäre Zwischenschicht vorgesehen sein kann, um eine oder mehrere nichtmetallische Schichten registergenau aufzubringen.

Das erfindungsgemäße Verfahren schließt ein, daß zur Ausbildung von Masken auch Bereiche vorgesehen sein können, die beide ein Tiefen-zu-Breiten-Verhältnis größer Null aufweisen, das jedoch unterschiedlich groß ist, wodurch die optische Dichte der mit gleicher Flächenrate beschichteten Bereiche unterschiedlich ausgebildet ist.

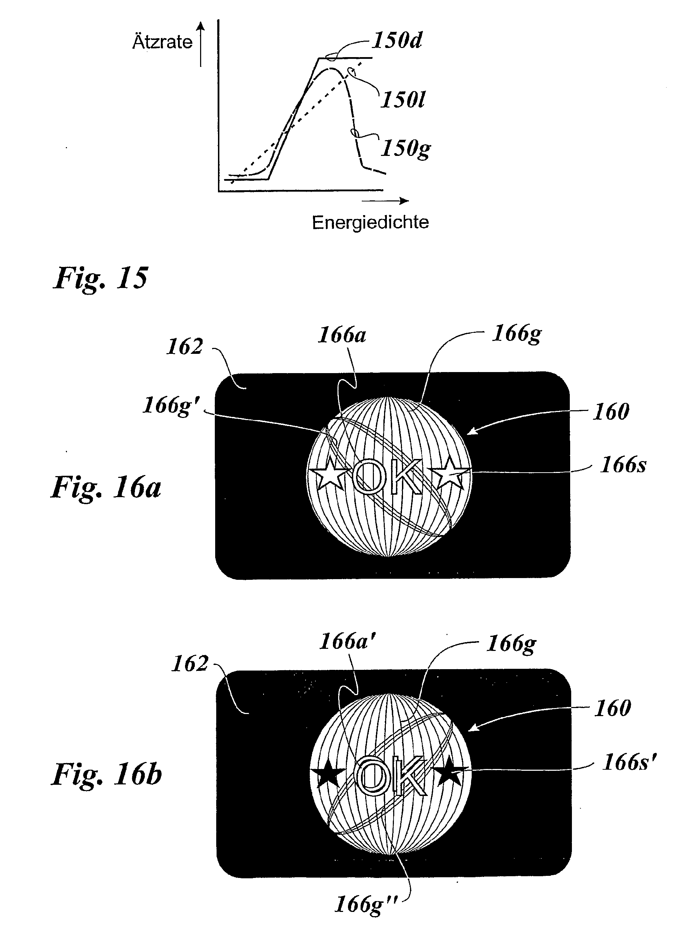

Fig. 15 zeigt nun in schematischer graphischer Darstellung drei Ätzcharakteristiken von Entwicklern, die für die Ausbildung der Ätzmaske aus der photoempfindlichen Schicht bestimmt sind. Die Ätzcharakteristiken stellen die Ätzrate, d.h. den Materialabtrag pro Zeiteinheit, in Abhängigkeit von der Energiedichte dar, mit der die photoempfindliche Schicht belichtet wurde. Eine erste Ätzcharakteristik 150l ist linear ausgebildet. Eine solche Ätzcharakteristik kann bevorzugt sein, wenn nach Zeit entwickelt werden soll.

Im allgemeinen kann jedoch eine binäre Ätzcharakteristik 150b bevorzugt sein, weil nur geringe Unterschiede in der Energiedichte benötigt sind, um eine deutlich unterschiedliche Ätzrate auszubilden und auf diese Weise bei geringen Unterschieden der optischen Dichte benachbarter Bereiche die vollständige Entfernung der Maskenschicht in den Bereichen mit höherem Tiefen-zu-Breiten-Verhältnis oder umgekehrt mit hoher Sicherheit vorzunehmen.

Eine dritte Ätzcharakteristik 150g mit glockenförmigem Verlauf, die durch Wahl des Photoresists und der Prozeßführung einstellbar ist, kann verwendet werden, um Strukturen selektiv in Abhängigkeit von der optischen Dichte des Bereichs zu entfernen bzw. zu erhalten. Diese Ätzcharakteristik kann besonders bevorzugt sein, wenn beispielsweise drei Bereiche mit unterschiedlicher optischer Dichte vorgesehen sind.

Die Fig. 16a und 16b zeigen nun ein erstes Anwendungsbeispiel mit einem Mehrschichtkörper 160. Er kann beispielsweise auf der Vorderseite einer ID-Card 162 angeordnet sein. Der Mehrschichtkörper 160 ist mit einer im Register teilweise entfernten metallischen Schicht ausgebildet, die diffraktive Strukturen überdeckt und die als Guillochen 166g, 166g' und 166g", als sternförmige Elemente 166s und als alphanumerische Zeichen 166a und 166a' ausgebildet ist. Dabei zeigen die Fig. 16a und 16b unterschiedliche Ansichten des Mehrschichtkörpers 160, die durch Verschwenken der ID-Card 162 ausgebildet sind. Bei den Guillochen 166g handelt es sich um feine linienförmige Bereiche, die beim Verschwenken der ID-Card 162 ihre Lage beibehalten. Bei den Guillochen 166g' und 166g" handelt es sich um feine linienförmige Bereiche, die beim Verschwenken der ID-Card 162 nacheinander sichtbar werden, so daß die Illusion einer Bewegung erzeugt wird. Die sternförmigen Elemente 166s und 166s' sind Ausbildungen eines Bereiches mit einer holographischen Struktur, so daß sie je nach Kipplage der ID-Card 162 mit unterschiedlicher Größe und/oder Farbe ausgebildet sind. Bei den alphanumerischen Zeichen 166a und 166a' kann es sich beispielsweise um einen Bereich mit einer Kinegram^{®}-Struktur handeln.

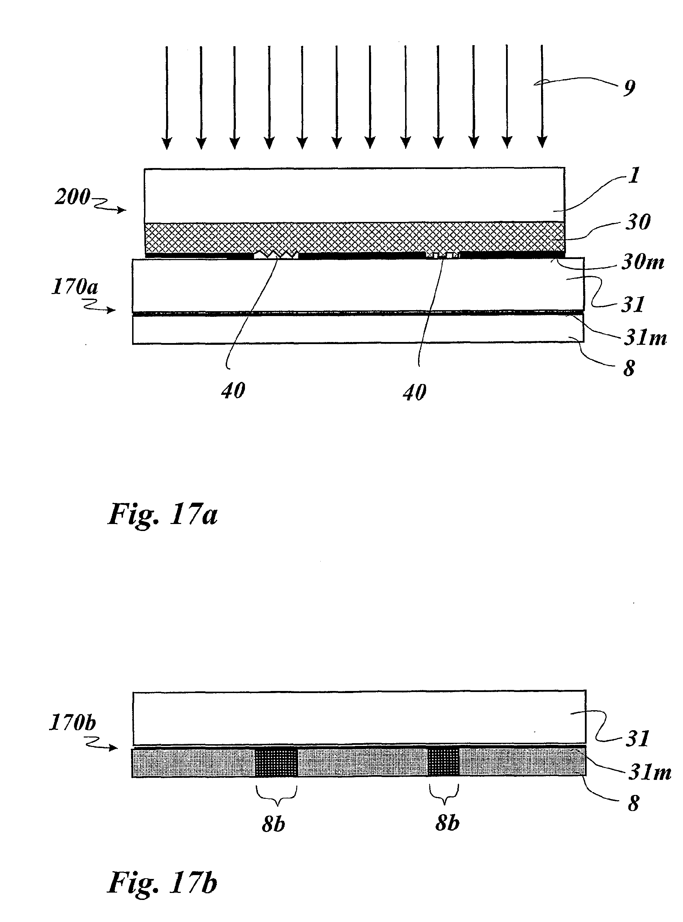

Die Fig. 17a bis 17d zeigen ein zweites Anwendungsbeispiel eines Mehrschichtkörpers. Ein erster Mehrschichtkörper 200 ist in diesem Anwendungsbeispiel als eine Belichtungsmaske ausgebildet. Wie in Fig. 17a dargestellt, weist der erste Mehrschichtkörper 200 eine Trägerfolie 1 mit einer Replizierschicht 30 auf, die mit einer partiell ausgeformten metallischen Schicht 30m beschichtet ist. Der erste Mehrschichtkörper 200 kann vorzugsweise mit den vorstehend beschriebenen Verfahren erzeugt worden sein.

Wie in Fig. 17a gezeigt, ist der erste Mehrschichtkörper 200 auf einem zweiten Mehrschichtkörper 170a angeordnet, der aus einer Trägerfolie 31, einer metallischen Schicht 31m und einer photoempfindlichen Schicht 8 gebildet ist. Die Außenseite der metallischen Schicht 30m des ersten Mehrschichtkörpers 200 ist der Außenseite der Trägerfolie 31 zugewandt und liegt auf dieser auf. Die metallische Schicht 30m ist in Bereichen 40 entfernt, in denen die Replizierschicht 30 wie weiter oben beschrieben, ein höheres Tiefen-zu-Breiten-Verhältnis aufweist als in den Bereichen, in denen die metallische Schicht 30m nicht entfernt ist.

In dem in Fig. 17a dargestellten Anwendungsbeispiel wird der zweite Mehrschichtkörper 170a durch den als Belichtungsmaske ausgebildeten ersten Mehrschichtkörper 200 hindurch belichtet. Die Belichtung ist durch Pfeile 9 bezeichnet. Wegen der äußerst geringen Schichtdicken der Trägerfolie 31 und der metallischen Schicht 31m wird nun das Bild der partiell ausgebildeten metallischen Schicht 31m auf die photoempfindliche Schicht 8 übertragen, wodurch, wie in Fig. 17b dargestellt, ein Mehrschichtkörper 170b ausgebildet wird, bei dem die photoempfindlichen Schicht 8 stärker belichtete Bereiche 8b ausweist. Wie sich gezeigt hat, kann dabei die im Strahlengang angeordnete metallische Schicht 31 m opak ausgebildet sein. Die opake metallische Schicht 31m vermindert zwar die auf der photoempfindlichen Schicht 8 erzeugte Beleuchtungsstärke, sie stört jedoch nicht die Ausbildung stärker belichteter Bereiche 8b. Wie bereits ausgeführt, weist die metallische Schicht 31 m eine geringe Schichtdicke auf, so daß Abbildungsfehler beispielsweise durch Streuung nicht zu beobachten sind.

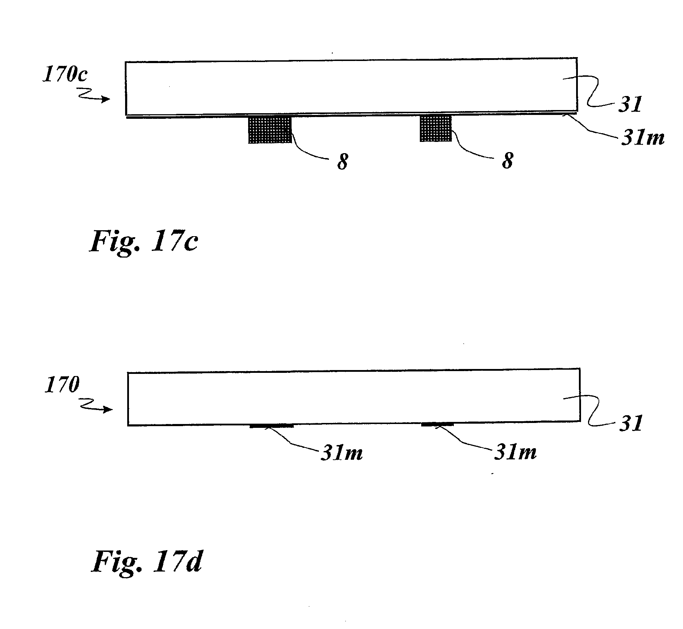

Fig. 17c zeigt nun einen Mehrschichtkörper 170c, der durch Entwickeln der photoempfindlichen Schicht 8 aus dem Mehrschichtkörper 170b in Fig. 17b gebildet ist. Bei der photoempfindlichen Schicht 8 handelt es sich in diesem Anwendungsbeispiel um einen sog. negativen Photoresist, bei dem unbelichtete Bereiche durch das Entwickeln entfernt werden.

Fig. 17d schließlich zeigt einen Mehrschichtkörper 170, der durch Ätzen der metallischen Schicht 31 m und dem Entfernen der Überreste der photoempfindlichen Schicht 8 aus dem Mehrschichtkörper 170c in Fig. 17c gebildet ist. Die metallische Schicht 31m ist in den Bereichen erhalten, die durch die entwickelte photoempfindliche Schicht 8 abgedeckt waren. Sie kann auf dem Mehrschichtkörper 170 beispielsweise ein elektrisches Bauelement, wie eine Antenne und/oder eine Spule, oder eine oder mehrere Leiterbahnen bilden.

Wenngleich bei diesem Anwendungsbeispiel die Passergenauigkeit nicht ohne Justierung einstellbar ist, so können doch vorteilhafterweise filigrane Muster erzeugt werden, die in ihren Teilbereichen passergenau zueinander ausgerichtet sind. Es kann aber auch vorgesehen sein, auf die passergenaue Ausrichtung zu verzichten, wenn beispielsweise der Mehrschichtkörper 170 ein Sicherheitsmerkmal, wie eine ein Sicherheitsdokument überdeckende Guilloche bildet, das nicht passergenau ausgerichtet sein muß, um die Sicherheitsfunktion zu erfüllen.

Es kann weiter vorgesehen sein, die Bereiche 40 in ihrem Tiefen-zu-Breiten-Verhältnis und/oder in ihrer Polarisationsabhängigkeit zu differenzieren und auf diese Weise eine lithographische Graustufen-Maske auszubilden, die eine sehr geringe Dicke aufweisen kann. Herkömmliche Glasmasken können nicht dünner als 5 µm ausgebildet werden, was ihre Anwendbarkeit einschränken kann.

## Patentansprüche

1. Verfahren zur Herstellung eines Mehrschichtkörpers (100, 100') mit einer partiell ausgeformten ersten Schicht (3m), wobei
in einem ersten Bereich einer Replizierschicht (3) des Mehrschichtkörpers eine diffraktive erste Reliefstruktur (4) abgeformt wird,
**dadurch gekennzeichnet,**
**daß** die erste Schicht (3m) auf die Replizierschicht (3) in dem ersten Bereich und in einem zweiten Bereich, in dem die erste Reliefstruktur nicht in der Replizierschicht (3) abgeformt ist, mit einer konstanten Flächendichte bezogen auf eine von der Replizierschicht (3) aufgespannte Ebene aufgebracht wird, daß auf die erste Schicht (3m) eine photoempfindliche Schicht (8) aufgebracht wird oder als Replizierschicht eine photoempfindliche Waschmaske aufgebracht wird, daß die photoempfindliche Schicht bzw. Waschmaske (8) durch die erste Schicht (3m) hindurch belichtet wird, so daß die photoempfindliche Schicht bzw. Waschmaske (8) durch die erste Reliefstruktur bedingt im ersten und im zweiten Bereich unterschiedlich belichtet wird, und daß die erste Schicht (3m) unter Verwendung der belichteten photoempfindlichen Schicht bzw. Waschmaske (8) als Maskenschicht im ersten Bereich, nicht jedoch im zweiten Bereich oder im zweiten Bereich, nicht jedoch im ersten Bereich entfernt wird.

2. Verfahren nach Anspruch 1,
**dadurch gekennzeichnet,**
**daß** die erste Schicht (3m) auf die Replizierschicht (3) vollflächig aufgebracht, insbesondere aufgedampft wird.

3. Verfahren nach Anspruch 1 oder 2,
**dadurch gekennzeichnet,**
**daß** die erste Schicht (3m) auf die Replizierschicht (3) in einer Dicke aufgebracht wird, bei der die erste Schicht (3m) eine optische Dichte von größer als 1,5 besitzt.

4. Verfahren nach Anspruch 1 oder 2,
**dadurch gekennzeichnet,**
**daß** die erste Schicht (3m) auf die Replizierschicht (3) vollflächig in einer Dicke aufgebracht wird, bei der die erste Schicht (3m) eine optische Dichte zwischen 2 und 7 besitzt.

5. Verfahren nach einem der vorhergehenden Ansprüche,
**dadurch gekennzeichnet,**
**daß** die erste Schicht (3m) von einer Metallschicht oder von einer Schicht aus einer Metallegierung gebildet wird.

6. Verfahren nach einem der vorhergehenden Ansprüche,
**dadurch gekennzeichnet,**
**daß** in dem zweiten Bereich eine zweite Reliefstruktur in der Replizierschicht abgeformt ist und daß als erste Reliefstruktur eine diffraktive Reliefstruktur in die Replizierlackschicht abgeformt wird, die die Transmission, insbesondere die Transparenz der ersten Schicht (3m) im ersten Bereich gegenüber der Transmission, insbesondere der Transparenz der ersten Schicht (3m) in dem zweiten Bereich erhöht.

7. Verfahren nach Anspruch 6,
**dadurch gekennzeichnet,**
**daß** die erste Reliefstruktur eine größere Relieftiefe als die zweite Reliefstruktur besitzt.

8. Verfahren nach einem der Ansprüche 6 oder 7,
**dadurch gekennzeichnet,**
**daß** das Produkt aus Spatialfrequenz und Relieftiefe der ersten Reliefstruktur größer als das Produkt aus Spatialfrequenz und Relieftiefe der zweiten Reliefstruktur ist.

9. Verfahren nach einem der Ansprüche 6 bis 8,
**dadurch gekennzeichnet,**
**daß** die erste oder zweite Reliefstrukur als optisch aktive, reflektierende oder transmittierende lichtbeugende und/oder lichtbrechende und/oder lichtstreuende Mikro- oder Nanostruktur ausgebildet ist, beispielsweise als Gitterstruktur, wie Lineargitter oder Kreuzgitter, als isotrope oder anisotrope Mattstruktur, als binäre oder kontinuierliche Fresnellinse, als Mikroprisma, als Blazegitter, als Kombinationsstruktur oder als Makrostruktur ausgebildet ist.

10. Verfahren nach einem der vorhergehenden Ansprüche,
**dadurch gekennzeichnet,**
**daß** in dem ersten Bereich als erste Reliefstruktur eine diffraktive Reliefstruktur mit einem hohem Tiefen-zu-Breiten-Verhältnis der einzelnen Strukturelemente, insbesondere mit einem Tiefen-zu-Breiten-Verhältnis von > 0,3, abgeformt wird.

11. Verfahren nach Anspruch 10,
**dadurch gekennzeichnet,**
**daß** die zweite Reliefstruktur als Reliefstruktur mit niedrigerem Tiefen-zu-Breiten-Verhältnis ausgebildet wird.

12. Verfahren nach einem der vorhergehenden Ansprüche,
**dadurch gekennzeichnet,**
**daß** in dem zweiten Bereich die Grenzschicht zwischen Replizierschicht und erster Schicht weitgehend planar ist.

13. Verfahren nach einem der vorhergehenden Ansprüche,
**dadurch gekennzeichnet,**
**daß** als photoempfindliche Schicht (8) oder als photoempfindliche Waschmaske ein photoempfindliches Material mit einer binären Charakteristik aufgebracht wird und daß die photoempfindliche Schicht bzw. die photoempfindliche Waschmaske durch die erste Schicht hindurch in einer Belichtungsstärke und Belichtungsdauer belichtet wird, daß die photoempfindliche Schicht (8) bzw. die photoempfindliche Waschmaske im ersten Bereich, in dem die Transmission der ersten Schicht (3m) durch die erste Reliefstruktur erhöht ist, aktiviert wird und im zweiten Bereich nicht aktiviert wird.

14. Verfahren nach Anspruch 13,
**dadurch gekennzeichnet,**
**daß** die photoempfindliche Schicht bzw. Waschmaske (8) durch die erste Schicht (3m) hindurch mittels UV Strahlung belichtet wird.

15. Verfahren nach einem der vorhergehenden Ansprüche,
**dadurch gekennzeichnet,**
**daß** die durch die Belichtung aktivierten Bereiche der photoempfindlichen Waschmaske und die dort angeordneten Bereiche der ersten Schicht (3m) in einem Waschprozeß entfernt werden.

16. Verfahren nach einem der vorhergehenden Ansprüche,
**dadurch gekennzeichnet,**
**daß** die durch die erste Schicht (3m) hindurch belichtete photoempfindliche Schicht (8) entwickelt wird und daß die entwickelte photoempfindliche Schicht (8) eine Ätzmaske für die erste Schicht (3m) bildet.

17. Verfahren nach einem der vorhergehenden Ansprüche,
**dadurch gekennzeichnet,**
**daß** die photoempfindliche Schicht durch die Belichtung im ersten Bereich, in dem die Transmission der ersten Schicht (3m) durch die erste Reliefstruktur erhöht ist, aktiviert wird, und daß die aktivierte photoaktivierbare Schicht ein Ätzmittel für die erste Schicht (3m) bildet.

18. Verfahren nach einem der vorhergehenden Ansprüche,
**dadurch gekennzeichnet,**
**daß** die photoempfindliche Schicht (8) aus einem Photoresist ausgebildet wird.

19. Verfahren nach Anspruch 18,
**dadurch gekennzeichnet,**
**daß** der Photoresist als positiver Photoresist ausgebildet wird.

20. Verfahren nach Anspruch 18,
**dadurch gekennzeichnet,**
**daß** der Photoresist als negativer Photoresist ausgebildet wird.

21. Verfahren nach einem der vorhergehenden Ansprüche,
**dadurch gekennzeichnet,**
**daß** die photoempfindliche Schicht (8) als ein Photopolymer ausgebildet wird.

22. Verfahren nach einem der Ansprüche 16 bis 21;
**dadurch gekennzeichnet,**
**daß** die Überreste der Atzmasken entfernt werden.

23. Verfahren nach einem der vorhergehenden Ansprüche,
**dadurch gekennzeichnet,**
**daß** in die Bereiche, in denen die erste Schicht (3m) entfernt wird, eine zweite Schicht (3p) eingebracht wird.

24. Verfahren nach Anspruch 23,
**dadurch gekennzeichnet,**
**daß** die noch verbleibenden Bereiche der ersten Schicht (3m) entfernt werden und durch eine dritte Schicht (3p') ersetzt werden.

25. Verfahren nach einem der vorhergehenden Ansprüche,
**dadurch gekennzeichnet,**
**daß** die erste Schicht (3m) und/oder die zweite Schicht (3p) und/oder die dritte Schicht (3p') galvanisch verstärkt werden.

26. Verfahren nach Anspruch 1,
**dadurch gekennzeichnet,**
**daß** der zweite Bereich musterförmig ausgeformt wird und der erste Bereich und der zweite Bereich unmittelbar benachbart nebeneinander angeordnet werden, vorzugsweise der zweite Bereich von dem ersten Bereich oder der erste Bereich von dem zweiten Bereich umschlossen wird.

27. Verfahren nach Anspruch 1,
**dadurch gekennzeichnet,**
**daß** der zweite Bereich aus zwei oder mehr vom ersten Bereich umschlossenen Teilbereichen besteht, daß in dem zweiten Bereich eine optisch aktive zweite Reliefstruktur in der Replizierschicht abgeformt wird, und daß die erste Schicht eine Reflexionsschicht ist, die in dem ersten Bereich entfernt ist und so passergenau zur zweiten Reliefstruktur angeordnet wird.

28. Verfahren nach Anspruch 1,
**dadurch gekennzeichnet,**
**daß** der erste Bereich aus zwei oder mehr vom zweiten Bereich umschlossenen Teilbereichen besteht oder umgekehrt, und daß die erste Schicht eine Reflexionsschicht ist, die in dem zweiten Bereich entfernt ist und so passergenau zur ersten Reliefstruktur angeordnet ist.

29. Verfahren nach einem der vorhergehenden Ansprüche,
**dadurch gekennzeichnet,**
**daß** die Teilbereiche des zweiten Bereichs bzw. die Teilbereiche des ersten Bereichs eine Breite von weniger als 2 mm, vorzugsweise von weniger als 1 mm aufweisen.

30. Verfahren nach einem der vorhergehenden Ansprüche,
**dadurch gekennzeichnet,**
**daß** eine zweite Schicht (3p) in den Bereichen der Replizierschicht (3) angeordnet wird, in denen die erste Schicht (3m) nicht vorhanden ist.

31. Verfahren nach einem der vorhergehenden Ansprüche,
**dadurch gekennzeichnet,**
**daß** die erste Schicht (3m) und/oder die zweite Schicht (3p) aus einem Dielektrikum, beispielsweise aus TiO₂ oder ZnS ausgebildet wird/werden.

32. Verfahren nach Anspruch 31,
**dadurch gekennzeichnet,**
**daß** die erste Schicht (3m) und die zweite Schicht (3p) mit unterschiedlichen Brechzahlen ausgebildet sind.

33. Verfahren nach einem der vorhergehenden Ansprüche,
**dadurch gekennzeichnet,**
**daß** die erste Schicht (3m) und/oder die zweite Schicht (3p) aus einem Polymer ausgebildet wird/werden.

34. Verfahren nach einem der vorhergehenden Ansprüche,
**dadurch gekennzeichnet,**
**daß** die erste Schicht (3m) und/oder die zweite Schicht (3p) als farbige Schicht ausgebildet wird/werden.

35. Verfahren nach einem der vorhergehenden Ansprüche,
**dadurch gekennzeichnet,**
**daß** die erste Schicht (3m) und/oder die zweite Schicht (3p) aus mehreren Teilschichten ausgebildet wird/werden.

36. Verfahren nach Anspruch 35,
**dadurch gekennzeichnet,**
**daß** die Teilschichten ein Dünnfilmschichtsystem bilden.

37. Verfahren nach Anspruch 35 oder 36,
**dadurch gekennzeichnet,**
**daß** die Teilschichten aus unterschiedlichen Materialien gebildet werden.

38. Verfahren nach einem der vorhergehenden Ansprüche,
**dadurch gekennzeichnet,**
**daß** die erste Schicht (3m) und/oder die zweite Schicht (3p) ein optisches Muster bildet/bilden.

39. Verfahren nach einem der vorhergehenden Ansprüche,
**dadurch gekennzeichnet,**
**daß** die erste Schicht (3m) und/oder die zweite Schicht (3p) ein Rasterbild bildet/bilden.

40. Verfahren nach einem der vorhergehenden Ansprüche,
**dadurch gekennzeichnet,**
**daß** die erste Schicht (3m) und/oder die zweite Schicht (3p) ein oder mehrere optische Sicherheitsmerkmale ausbilden.

41. Verfahren nach einem der vorhergehenden Ansprüche,
**dadurch gekennzeichnet,**
**daß** die erste Schicht (3m) und/oder die zweite Schicht (3p) ein elektronisches Bauelement bilden bzw. bildet, beispielsweise eine Antenne, einen Kondensator, eine Spule oder ein organisches Halbleiterbauelement.

42. Verfahren nach einem der vorhergehenden Ansprüche,
**dadurch gekennzeichnet,**
**daß** der Mehrschichtkörper ein Folienelement, insbesondere eine Transferfolie, eine Heißprägefolie oder Laminierfolie ist.

43. Verfahren nach einem der vorhergehenden Ansprüche,
**dadurch gekennzeichnet,**
**daß** die erste Schicht (3m) und/oder die zweite Schicht (3p) eine Orientierungsschicht zur Ausrichtung von Flüssigkristallen ausbilden.

44. Verfahren nach Anspruch 43,
**dadurch gekennzeichnet,**
**daß** die Orientierungsschicht diffraktive Strukturen zur Orientierung der Flüssigkristalle aufweist, die lokal unterschiedlich ausgerichtet sind, so daß die Flüssigkristalle unter polarisiertem Licht betrachtet eine Information, wie beispielsweise ein Logo, darstellen.

45. Verfahren nach Anspruch 1 zur Herstellung eines Mehrschichtkörpers (200) mit einer partiell ausgeformten zweiten Schicht (31 m),
**dadurch gekennzeichnet,**
**daß** in einem ersten Bereich einer Replizierschicht (30) eine diffraktive erste Reliefstruktur (40) abgeformt wird, daß eine erste Schicht (30m) auf die Replizierschicht (30) in dem ersten Bereich und in einem zweiten Bereich, in dem die erste Reliefstruktur nicht in der Replizierschicht (30) abgeformt ist, mit einer konstanten Flächendichte bezogen auf eine von der Replizierschicht (30) aufgespannte Ebene aufgebracht wird, daß eine photoempfindliche Schicht oder photoempfindliche Waschmaske (8) durch die erste Schicht (30m) hindurch belichtet wird, so daß die photoempfindliche Schicht bzw. Waschmaske (8) durch die erste Reliefstruktur bedingt im ersten und im zweiten Bereich unterschiedlich belichtet wird, und daß die zweite Schicht (31m) unter Verwendung der belichteten photoempfindlichen Schicht bzw. Waschmaske (8) als Maskenschicht im ersten Bereich, nicht jedoch im zweiten Bereich oder im zweiten Bereich, nicht jedoch im ersten Bereich entfernt wird.

46. Verfahren nach Anspruch 45,
**dadurch gekennzeichnet,**
**daß** die photoempfindliche Schicht oder photoempfindliche Waschmaske (8) durch die zweite Schicht hindurch belichtet wird.

47. Verfahren nach Anspruch 45 oder 46,
**dadurch gekennzeichnet,**
**daß** die Replizierschicht auf eine Trägerschicht einer Belichtungsmaske aufgebracht wird.

48. Verfahren nach einem der Ansprüche 45 bis 47,
**dadurch gekennzeichnet,**
**daß** die photoempfindliche Schicht auf die zweite Schicht aufgebracht wird.

49. Verfahren nach einem der Ansprüche 47 bis 48,
**dadurch gekennzeichnet,**
**daß** die zweite Schicht auf die photoempfindliche Waschmaske aufgebracht wird.

## Claims

1. Method for the production of a multilayer body (100, 100') having a partially formed first layer (3m), wherein a diffractive first relief structure (4) is moulded in a first region of a replicating layer (3) of the multilayer body,
**characterised in that**,
the first layer (3m) is applied to the replicating layer (3) in the first region and in a second region in which the first relief structure is not moulded in the replicating layer (3), with a constant areal density with respect to a plane spanned by the replicating layer (3), **in that** a photosensitive layer (8) is applied to the first layer (3m) or a photosensitive washing mask is applied as a replicating layer, **in that** the photosensitive layer or washing mask (8) is exposed through the first layer (3m), such that the photosensitive layer or washing mask (8) is necessarily exposed to a different degree through the first relief structure in the first and in the second region, and **in that** the first layer (3m) is removed by using the exposed photosensitive layer or washing mask (8) as a masking layer in the first region, but not in the second region, or in the second region but not in the first region.

2. Method according to claim 1,
**characterised in that**,
the first layer (3m) is applied in full to the replicating layer (3), in particular vapour deposited.

3. Method according to claim 1 or 2,
**characterised in that**,
the first layer (3m) is applied to the replicating layer (3) at a thickness at which the first layer (3m) possesses an optical density of greater than 1.5.

4. Method according to claim 1 or 2,
**characterised in that**,
the first layer (3m) is applied in full to the replicating layer (3) at a thickness at which the first layer (3m) possesses an optical density of between 2 and 7.

5. Method according to one of the preceding claims,
**characterised in that**,
the first layer (3m) is formed by a metallic layer or by a layer made from a metal alloy.

6. Method according to one of the preceding claims,
**characterised in that**,
a second relief structure in the replicating layer is moulded in the second region and a diffractive relief structure is moulded into the replicating lacquer layer as a first relief structure, said lacquer layer increasing the transmission, in particular the transparency, of the first layer (3m) in the first region compared to the transmission, in the particular the transparency, of the first layer (3m) in the second region.

7. Method according to claim 6,
**characterised in that**,
the first relief structure possesses a greater relief depth than the second relief structure.

8. Method according to one of claims 6 or 7,
**characterised in that**,
the product of spatial frequency and relief depth of the first relief structure is greater than the product of spatial frequency and relief depth of the second relief structure.

9. Method according to one of claims 6 to 8,
**characterised in that**,
the first or second relief structure is formed as an optically active, reflective or transmissive, light-diffracting and/or light-refracting and/or light-scattering micro or nano structure, for example a grid structure such as a linear grid or cross grid, as an isotropic or anisotropic matt structure, as a binary or continuous Fresnel lens, as microprisms, as blazed gratings, as a combination structure or as a macro structure.

10. Method according to one of the preceding claims,
**characterised in that**,
a diffractive relief structure with a high depth-to-width ratio of the individual components, in particular with a depth-to-width ratio of > 0.3, is moulded in the first region as a first relief structure.

11. Method according to claim 10,
**characterised in that**,
the second relief structure is formed as a relief structure with a low depth-to-width ratio.

12. Method according to one of the preceding claims,
**characterised in that**,
the boundary layer between the replicating layer and the first layer is largely planar in the second region.

13. Method according to one of the preceding claims,
**characterised in that**,
a photosensitive material with a binary characteristic is applied as the photosensitive layer (8) or as the photosensitive washing mask, and **in that** the photosensitive layer or the photosensitive washing mask is exposed through the first layer at such an exposure intensity and exposure duration that the photosensitive layer (8) or the photosensitive washing mask is activated in the first region in which the transmission of the first layer (3m) is increased by the first relief structure, and is not activated in the second region.

14. Method according to claim 13,
**characterised in that**,
the photosensitive layer or washing mask (8) is exposed through the first layer (3m) by means of UV irradiation.

15. Method according to one of the preceding claims,
**characterised in that**,
the regions of the photosensitive washing mask that are activated by the exposure, and the regions of the first layer (3m) arranged there, are removed in a washing process.

16. Method according to one of the preceding claims,
**characterised in that**,
the photosensitive layer (8) exposed through the first layer (3m) is developed and the developed photosensitive layer (8) forms an etching mask for the first layer (3m).

17. Method according to one of the preceding claims,
**characterised in that**,
the photosensitive layer is activated by the exposure in the first region in which the transmission of the first layer (3m) is increased by the first relief structure, and **in that** the activated photo-activatable layer forms an etching agent for the first layer (3m).

18. Method according to one of the preceding claims,
**characterised in that**,
the photosensitive layer (8) is formed from a photoresist.

19. Method according to claim 18,
**characterised in that**,
the photoresist is formed as a positive photoresist.

20. Method according to claim 18,
**characterised in that**,
the photoresist is formed as a negative photoresist.

21. Method according to one of the preceding claims,
**characterised in that**,
the photosensitive layer (8) is formed as a photopolymer.

22. Method according to one of claims 16 to 21,
**characterised in that**,
the remnants of the etching masks are removed.

23. Method according to one of the preceding claims,
**characterised in that**,
a second layer (3p) is introduced into the regions in which the first layer (3m) is removed.

24. Method according to claim 23,
**characterised in that**,
the regions of the first layer (3m) that still remain are removed and are replaced by a third layer (3p').

25. Method according to one of the preceding claims,
**characterised in that**,
the first layer (3m) and/or the second layer (3p) and/or the third layer (3p') are galvanically reinforced.

26. Method according to claim 1,
**characterised in that**,
the second region is formed in a pattern and the first region and the second region are arranged directly adjacent to each other, with the second region preferably being enclosed by the first region or the first region being enclosed by the second region.

27. Method according to claim 1,
**characterised in that**,
the second region consists of two or more partial regions that are enclosed by the first region, **in that**, in the second region, an optically active second relief structure is moulded in the replicating layer, and **in that** the first layer is a reflective layer that is removed in the first region and thus is arranged precisely with respect to the second relief structure.

28. Method according to claim 1,
**characterised in that**,
the first region consists of two or more partial regions that are enclosed by the second region, or vice versa, and **in that** the first layer is a reflective layer that is removed in the second region and thus is arranged precisely with respect to the first relief structure.

29. Method according to one of the preceding claims,
**characterised in that**,
the partial regions of the second region or the partial regions of the first region have a width of less than 2mm, preferably less than 1mm.

30. Method according to one of the preceding claims,
**characterised in that**,
a second layer (3p) is arranged in the regions of the replicating layer (3) in which the first layer (3m) is not present.

31. Method according to one of the preceding claims,
**characterised in that**,
the first layer (3m) and/or the second layer (3p) is/are formed from a dielectric, for example made from TiO₂ or ZnS.

32. Method according to claim 31,
**characterised in that**,
the first layer (3m) and the second layer (3p) are formed with different refractive indices.

33. Method according to one of the preceding claims,
**characterised in that**,
the first layer (3m) and/or the second layer (3p) is/are formed from a polymer.

34. Method according to one of the preceding claims,
**characterised in that**,
the first layer (3m) and/or the second layer (3p) is/are formed as a coloured layer.

35. Method according to one of the preceding claims,
**characterised in that**,
the first layer (3m) and/or the second layer (3p) is/are formed from several partial layers.

36. Method according to claim 35,
**characterised in that**,
the partial layers form a thin film layer system.

37. Method according to claim 35 or 36,
**characterised in that**,
the partial layers are formed from different materials.

38. Method according to one of the preceding claims,
**characterised in that**,
the first layer (3m) and/or the second layer (3p) form(s) an optical pattern.

39. Method according to one of the preceding claims,
**characterised in that**,
the first layer (3m) and/or the second layer (3p) form(s) a grid image.

40. Method according to one of the preceding claims,
**characterised in that**,
the first layer (3m) and/or the second layer (3p) form one or more optical security features.

41. Method according to one of the preceding claims,
**characterised in that**,
the first layer (3m) and/or the second layer (3p) form(s) an electronic component, for example an antenna, a capacitor, a coil or an organic semiconductor component.

42. Method according to one of the preceding claims,
**characterised in that**,
the multilayer body is a film element, in particular a transfer film, a hot embossing film or laminate film.

43. Method according to one of the preceding claims,
**characterised in that**,
the first layer (3m) and/or the second layer (3p) form an orientation layer for the configuration of liquid crystals.

44. Method according to claim 43,
**characterised in that**,
the orientation layer has diffractive structures for the orientation of the liquid crystals, which are configured with local differences, such that the liquid crystals, when observed under polarised light, depict information such as a logo.

45. Method according to claim 1 for the production of a multilayer body (200) having a partially formed second layer (31m),
**characterised in that**,
a diffractive first relief structure (40) is moulded in a first region of a replicating layer (30), **in that** a first layer (30m) is applied to the replicating layer (30) in the first region and in a second region in which the first relief structure is not moulded in the replicating layer (30), with a constant areal density with respect to a plane spanned by the replicating layer (30), **in that** a photosensitive layer or photosensitive washing mask (8) is exposed through the first layer (30m), such that the photosensitive layer or washing mask (8) is necessarily exposed to a different degree through the first relief structure in the first and in the second region, and **in that** the second layer (31m) is removed by using the exposed photosensitive layer or washing mask (8) as a masking layer in the first region, but not in the second region, or in the second region but not in the first region.

46. Method according to claim 45,
**characterised in that**,
the photosensitive layer or photosensitive washing mask (8) is exposed through the second layer.

47. Method according to claim 45 or 46,
**characterised in that**,
the replicating layer is applied to a carrier layer of an exposure mask.

48. Method according to one of claims 45 to 47,
**characterised in that**,
the photosensitive layer is applied to the second layer.

49. Method according to one of claims 47 to 48,
**characterised in that**,
the second layer is applied to the photosensitive washing mask.

## Revendications

1. Procédé de fabrication d'un corps multicouche (100, 100') comportant une première couche (3m) partiellement formée, dans lequel
dans une première zone d'une couche reproduite (3) du corps multicouche, une première structure en relief diffractive (4) est façonnée,
**caractérisé en ce que**
la première couche (3m) est appliquée sur la couche reproduite (3) dans la première zone et dans une deuxième zone dans laquelle la première structure en relief n'est pas façonnée dans la couche reproduite (3), en présentant une densité de surface constante par rapport à un plan s'étendant de la couche reproduite (3), **en ce que** sur la première couche (3m), une couche photosensible (8) est appliquée ou en tant que couche reproduite, un masque photosensible est appliqué, **en ce que** la couche photosensible ou le masque (8) sont exposés à travers la première couche (3m) de sorte que la couche photosensible ou le masque (8) sont exposés différemment à travers la première structure en relief dans certaines conditions, dans la première et dans la deuxième zone, et que la première couche (3m) est retirée en utilisant la couche photosensible ou le masque exposés (8) comme couche de masque dans la première zone, mais n'est pas retirée dans la deuxième zone ou est retirée dans la deuxième zone mais pas dans la première zone.

2. Procédé selon la revendication 1,
**caractérisé en ce que**
la première couche (3m) est appliquée, en particulier, est déposée en phase vapeur sur toute la surface de la couche reproduite.

3. Procédé selon la revendication 1 ou 2,
**caractérisé en ce que**
la première couche (3m) est appliquée sur la couche reproduite (3) en une épaisseur dans laquelle la première couche (3m) possède une densité optique supérieure à 1,5.

4. Procédé selon la revendication 1 ou 2,
**caractérisé en ce que**
la première couche (3m) est appliquée sur toute la surface de la couche reproduite (3) sur une épaisseur dans laquelle la première couche (3m) possède une densité optique entre 2 et 7.

5. Procédé selon l'une des revendications précédentes,
**caractérisé en ce que**
la première couche (3m) est formée d'une couche métallique ou d'une couche d'un alliage métallique.

6. Procédé selon l'une des revendications précédentes
**caractérisé en ce que**
dans la deuxième zone, une deuxième structure en relief est façonnée dans la couche reproduite et **en ce qu'**une structure en relief diffractive est façonnée en tant que première couche en relief dans la couche de laque reproduite, qui augmente la transmission, en particulier, la transparence de la première couche (3m) dans la première zone par rapport à la transmission, en particulier, la transparence de la première couche (3m) dans la deuxième couche.

7. Procédé selon la revendication 6,
**caractérisé en ce que**
la première structure en relief possède une profondeur de relief supérieure à celle de la deuxième structure en relief.

8. Procédé selon l'une des revendications précédentes 6 ou 7
**caractérisé en ce que**
le produit de la fréquence spatiale et des profondeurs de relief de la première structure en relief est supérieur au produit de la fréquence spatiale et des profondeurs de relief de la deuxième structure en relief.

9. Procédé selon l'une des revendications précédentes 6 à 8,
**caractérisé en ce que**
la première ou la deuxième structure en relief est formée comme une micro- ou une nano-structure optiquement active, réfléchissante ou transmissive diffractive et/ou réfringente et/ou dispersive, par exemple comme une structure à grille telle qu'une grille linéaire ou une grille croisée, comme structure mate isotrope ou anisotrope, comme une lentille de Fresnel binaire ou continue, comme un microprisme, comme un réseau de diffraction à échelette, comme une structure combinée ou comme une macrostructure.

10. Procédé selon l'une des revendications précédentes,
**caractérisé en ce que**
dans la première zone, comme première structure en relief, est façonnée une structure en relief diffractive présentant un rapport de profondeur à largeur élevé des éléments structuraux individuels, en particulier, un rapport de profondeur à largeur > 0,3.

11. Procédé selon la revendication 10
**caractérisé en ce que**
la deuxième structure en relief est formée comme une structure en relief présentant un rapport de profondeur à largeur inférieure.

12. Procédé selon l'une des revendications précédentes
**caractérisé en ce que**
dans la deuxième zone, l'interface entre la couche reproduite et la première couche est largement plane.

13. Procédé selon l'une des revendications précédentes
**caractérisé en ce que**
un matériau photosensible est appliqué en tant que couche photosensible (8) ou masque photosensible, présentant une caractéristique binaire et **en ce que** la couche photosensible ou le masque photosensible est exposé(e) à travers la première couche à une puissance d'exposition et une durée d'exposition telle que la couche photosensible (8) ou le masque photosensible dans la première zone dans laquelle la transmission de la première couche (3m) est augmentée à travers la première structure en relief, est activé(e) et dans la deuxième zone, n'est pas activé(e).

14. Procédé selon la revendication 13
**caractérisé en ce que**
la couche photosensible ou le masque (8) est exposé(e) à travers la première couche (3m) à un rayonnement UV.

15. Procédé selon l'une des revendications précédentes
**caractérisé en ce que**
les zones activées par l'exposition du masque photosensible et les zones de la première couche (3m) qui y sont disposées sont éliminées dans un processus de lavage.

16. Procédé selon l'une des revendications précédentes
**caractérisé en ce que**
la couche photosensible (8) exposée à travers la première couche (3m) est développée et que la couche photosensible (8) développée forme un masque de gravure pour la première couche (3m).

17. Procédé selon l'une des revendications précédentes
**caractérisé en ce que**
la couche photosensible est activée par l'exposition dans la première zone dans laquelle la transmission de la première couche (3m) est augmentée à travers la première structure en relief et **en ce que** la couche photoactivable activée forme un moyen de gravure pour la première couche (3m).

18. Procédé selon l'une des revendications précédentes
**caractérisé en ce que**
la couche photosensible (8) est constituée d'un matériau photorésistant.

19. Procédé selon la revendication 18
**caractérisé en ce que**
le matériau photorésistant est constitué comme un matériau photorésistant positif.

20. Procédé selon la revendication 18
**caractérisé en ce que**
le matériau photorésistant est constitué comme un matériau photorésistant négatif.

21. Procédé selon l'une des revendications précédentes
**caractérisé en ce que**
la couche photosensible (8) est conçue comme un photopolymère.

22. Procédé selon l'une des revendications 16 à 21,
**caractérisé en ce que**
les résidus du masque de gravure sont éliminés.

23. Procédé selon l'une des revendications précédentes
**caractérisé en ce que**
dans les zones dans lesquelles la première couche (3m) est éliminée, une deuxième couche (3p) est appliquée.

24. Procédé selon la revendication 23
**caractérisé en ce que**
les zones encore restantes de la première couche (3m) sont éliminées et sont remplacées par une troisième couche (3p').

25. Procédé selon l'une des revendications précédentes
**caractérisé en ce que**
la première couche (3m) et/ou la deuxième couche (3p) et/ou la troisième couche (3p') sont renforcées par galvanisation.

26. Procédé selon la revendication 1
**caractérisé en ce que**
la deuxième zone est pourvue d'un motif et la première zone et la deuxième zone sont disposées en étant immédiatement voisines l'une de l'autre, de préférence, la deuxième zone est entourée de la première zone ou la première zone est entourée de la deuxième zone.

27. Procédé selon la revendication 1
**caractérisé en ce que**
la deuxième zone consiste en deux ou plus des zones partielles entourées de la première zone, **en ce que** dans la deuxième zone, une deuxième structure en relief optiquement active est façonnée dans la couche reproduite et **en ce que** la première couche est une couche réfléchissante qui est éliminée dans la première zone et est disposée de façon exactement ajustée à la deuxième structure en relief.

28. Procédé selon la revendication 1
**caractérisé en ce que**
la première zone est constituée de deux ou plus des zones partielles entourées de la deuxième zone ou inversement et **en ce que** la première couche est une couche réfléchissante qui est éliminée dans la deuxième couche et est disposée de façon exactement ajustée à la première structure en relief.

29. Procédé selon l'une des revendications précédentes
**caractérisé en ce que**
les zones partielles de la deuxième zone ou les zones partielles de la première zone présentent une largeur de moins de 2 mm, de préférence, de moins de 1 mm.

30. Procédé selon l'une des revendications précédentes
**caractérisé en ce que**
une deuxième couche (3p) est disposée dans les zones de la couche reproduite (3) dans lesquelles la première couche (3m) n'est pas présente.

31. Procédé selon l'une des revendications précédentes
**caractérisé en ce que**
la première couche (3m) et/ou la deuxième couche (3p) est constituée d'un composant diélectrique, de préférence, de TiO₂ ou de ZnS.

32. Procédé selon la revendication 31
**caractérisé en ce que**
la première couche (3m) et la deuxième couche (3p) sont constituées en présentant différents indices de réfraction.

33. Procédé selon l'une des revendications précédentes
**caractérisé en ce que**
la première couche (3m) et/ou la deuxième couche (3p) est/sont constituée(s) d'un polymère.

34. Procédé selon l'une des revendications précédentes
**caractérisé en ce que**
la première couche (3m) et/ou la deuxième couche (3p) est/sont constituée(s) comme une couche colorée.

35. Procédé selon l'une des revendications précédentes
**caractérisé en ce que**
la première couche (3m) et/ou la deuxième couche (3p) est/sont constituée(s) de plusieurs couches partielles.

36. Procédé selon la revendication 35,
**caractérisé en ce que**
les couches partielles forment un système de couche en film mince.

37. Procédé selon l'une des revendications précédentes 35 ou 36,
**caractérisé en ce que**
les couches partielles sont formées de différents matériaux.

38. Procédé selon l'une des revendications précédentes
**caractérisé en ce que**
la première couche (3m) et/ou la deuxième couche (3p) forme/forment un motif optique.

39. Procédé selon l'une des revendications précédentes
**caractérisé en ce que**
la première couche (3m) et/ou la deuxième couche (3p) forme/forment une image de trame.

40. Procédé selon l'une des revendications précédentes
**caractérisé en ce que**
la première couche (3m) et/ou la deuxième couche (3p) forme(nt) une ou plusieurs caractéristiques optiques de sécurité.

41. Procédé selon l'une des revendications précédentes
**caractérisé en ce que**
la première couche (3m) et/ou la deuxième couche (3p) forme ou forment un composant électronique, par exemple, une antenne, un condensateur, une bobine ou un composant semi-conducteur organique.

42. Procédé selon l'une des revendications précédentes
**caractérisé en ce que**
le corps multicouche est un élément en feuille, en particulier, une feuille de transfert, une feuille d'estampage à chaud ou une feuille de stratification.

43. Procédé selon l'une des revendications précédentes
**caractérisé en ce que**
la première couche (3m) et/ou la deuxième couche (3p) forme(nt) une couche d'orientation pour orienter des cristaux liquides.

44. Procédé selon la revendication 43,
**caractérisé en ce que**
la couche d'orientation présente des structures diffractives pour l'orientation des cristaux liquides, qui sont orientées localement de façon différente de sorte que les cristaux liquides observés sous une lumière polarisée, représentent une information, par exemple, un logo.

45. Procédé selon la revendication 1, pour la fabrication d'un corps multicouche (200) comportant une deuxième couche (31m) partiellement formée,
**caractérisé en ce que**
dans une première couche d'une couche reproduite (30), une première structure en relief diffractive (40) est façonnée, **en ce qu'**une première couche (30m) est façonnée sur la couche reproduite (30) dans la première zone et dans une deuxième zone dans laquelle la première structure en relief n'est pas formée dans la couche reproduite (30), est appliquée avec une densité de surface constante sur l'un des plans s'étendant de la couche reproduite (30), **en ce qu'**une couche photosensible ou un masque photosensible (8) est exposé à travers la première couche (30m) de sorte que la couche ou le masque photosensible (8) soit exposé à travers la première structure en relief dans certaines conditions, dans la première et dans la deuxième zone et que la deuxième couche (31m) est retirée en utilisant la couche photosensible ou le masque exposé(s) (8) comme couche de masque dans la première zone, mais n'est pas retirée dans la deuxième zone ou est retirée dans la deuxième zone mais non dans la première zone.

46. Procédé selon la revendication 45
**caractérisé en ce que**
la couche photosensible ou le masque photosensible (8) est exposé(e) à travers la deuxième couche.

47. Procédé selon la revendication 45 ou 46
**caractérisé en ce que**
la couche reproduite est appliquée sur une couche de support d'un masque d'exposition.

48. Procédé selon l'une des revendications 45 à 47,
**caractérisé en ce que**
la couche photosensible est appliquée sur la deuxième couche.

49. Procédé selon l'une des revendications 47 à 48,
**caractérisé en ce que**
la deuxième couche est appliquée sur le masque photosensible.
